# EUROPEAN PATENT SPECIFICATION

(11) **EP 2 626 231 B1**
(45) Date of publication and mention of the grant of the patent: **15.06.2016**
(21) Application number: 13154365.4
(22) Date of filing: 07.02.2013
(51) Int. Cl.: B60L 11/18

(54) **Power supply device for electric vehicle**
Stromversorgungsvorrichtung für ein elektrisches Fahrzeug
Dispositif d'alimentation électrique pour véhicule électrique

(30) Priority: 09.02.2012 JP 2012026128; 20.02.2012 JP 2012034056
(43) Date of publication of application: 14.08.2013
(73) Proprietor: Honda Motor Co., Ltd., Tokyo 107-8556 (JP)
(72) Inventor: Kawatani, Shinji, Wako-shi, Saitama 351-0193 (JP); Nakayama, Masaru, Wako-shi, Saitama 351-0193 (JP); Shokaku, Isao, Wako-shi, Saitama 351-0193 (JP)
(74) Representative: Stevens, Jason Paul

(56) References cited:
- EP-A2- 2 280 436
- US-A1- 2010 136 425

## Description

The present invention relates to a power supply device for an electric vehicle. More particularly, the invention relates to a power supply device for an electric vehicle with a simple structure for detachably supporting a battery pack, with battery cells accommodated therein, on a vehicle body.

Conventionally, in an electric vehicle, a battery pack having a plurality of battery cells assembled in a battery case has been mounted as a power supply device at a centre portion of a frame of the electric vehicle. For instance, in a battery lock structure for an electric bicycle as described in Japanese Patent Laid-open No. 2000-142551, a support shaft and an engagement projection are provided on the battery side. On the other hand, a tentative positioning part and a locking surface part which can engage the support shaft and the engagement projection, and brackets each formed with a guide surface part for guiding the support shaft and a relief part, are provided on the electric bicycle side. When mounting the battery to the vehicle body from a lateral side of the vehicle body, the battery is moved to the tentative positioning part, while setting the support shaft along the guide surface parts of the brackets. The battery is rotated laterally inwards (towards the centre of the vehicle), with the support shaft supported on the tentative positioning part as a centre of rotation, and the engagement projection is locked to the locking surface part as a wedge. In this electric bicycle, the tentative positioning and the locking of the battery are carried out using different component parts, namely, the support shaft and the engagement projection. Consequently, the battery can be prevented from chattering in its mounted state.

In an electric bicycle, electrical connection parts are necessary for supply of electric power from the battery mounted onto the vehicle body to a motor or the like provided as electrical equipment on the vehicle body side (the electrical connection parts are not clearly shown in Japanese Patent Laid-open No. 2000-142551). On the vehicle body side, therefore, the above-mentioned brackets are provided in addition to members for holding the electrical connection parts onto the vehicle body. Thus, the number of component parts is increased. In addition, the support shaft and the engagement projection are provided at an outer circumferential surface of the battery. As a result, when carrying or storing the battery, extra care should be taken in handling the battery so as not to damage the support shaft or the engagement projection by mistake.

An alternative form of a battery pack for an electric vehicle, and an electric vehicle using such a battery pack, is disclosed in EP 2280436, on which the preamble of claim 1 is based.

Accordingly, it is an object at least the preferred embodiments of the present invention to provide a power supply device for an electric vehicle in which a battery pack is free of protruding parts and in which the battery pack can be tentatively positioned with a simple structure, thereby solving the above-mentioned problems.

In order to attain the above object, according to the present invention, there is provided an electric vehicle with a power supply device, which comprises a battery case for accommodating battery cells for supplying electric power to an electric motor of the electric vehicle and which can be mounted to and detached from the electric vehicle, wherein the power supply device further comprises a battery case terminal which can be connected from above to a vehicle body terminal accommodated in a terminal base provided on a vehicle body, and a battery case engagement part which can engage from above with a vehicle body engagement part formed at an upper surface of the terminal base; wherein the vehicle body engagement part is offset to one side from the lateral centre of the vehicle; and the battery case engagement part is offset to one side of the battery case from the lateral centre of the vehicle in a state where the battery case is mounted on the electric vehicle, and the battery case engagement part is formed at each of the front and rear side portions of the battery case relative to the vehicle, in order that the battery case engagement part can fit to the vehicle body engagement part; wherein the vehicle body engagement part is an engagement projection, the battery case engagement part is an engagement recess into which the engagement projection can fit, and, for mutual positioning, the engagement projection and the engagement recess are provided with wall parts extending parallel to a direction in which the battery case is mounted to and detached from the electric vehicle; and wherein the terminal base is formed with a shelf projecting horizontally from a foot portion of the engagement projection constituting the vehicle body engagement part toward the side to which the vehicle body engagement part is offset; and the positions and shapes of the engagement projection as the vehicle body engagement part, the engagement recess as the battery case engagement part, and the shelf are set such that a lower open end portion of the engagement recess makes contact with an upper surface of the shelf when the battery case is in a tentatively placed position wherein a peak portion of the engagement projection makes contact with an inner surface of an uppermost portion of a wall part forming the engagement recess.

With this arrangement, at the time of mounting or detaching the power supply device to or from the vehicle from one side of the vehicle, the operation can be carried out while visually checking the positions of the battery case engagement parts and the vehicle body engagement parts (which can be seen from that one side of the vehicle). In particular, when starting to mount the battery case to the terminal base, the battery pack can be positioned relative to the terminal base in the longitudinal direction of the vehicle by placing the wall parts of the battery case engagement parts along the wall parts of the vehicle body engagement parts. Thus, the battery case engagement parts can easily be engaged with the vehicle body engagement parts.

Further, when mounting or detaching the power supply device to or from the vehicle, tentative positioning of the power supply device can be achieved such that the lower open end portion of the engagement recess (the battery case engagement part) makes contact with the upper surface of the shelf protruding horizontally from the terminal base. Therefore, the power supply device can easily be mounted and detached.

In a preferred form, the battery case has a generally rectangular parallelepipedal shape, a lower surface of the generally rectangular parallelepiped being formed with a slant surface extending obliquely upward from the lower open end portion of the engagement recess toward that one of surfaces adjacent to the lower surface which is adjacent on the side of protrusion of the shelf; and the inclination angle of the slant surface is set such that the slant surface is situated along the upper surface of the shelf in the tentatively placed position of the battery case.

With this arrangement, the power supply device can be tentatively placed in a stable posture, by seating the slant surface of the battery case on the shelf.

Preferably, the vehicle body engagement part is provided at each of two positions of an upper surface of the terminal base; and the terminal base is provided with a vehicle body second engagement part disposed between the vehicle body engagement parts at the two positions, and with horizontal engagement parts protruding horizontally from a peak portion of the vehicle body second engagement part toward the vehicle body engagement portions at the two positions.

Thus, it is ensured that in the completely mounted position of the power supply device relative to the vehicle, the lower surface of the horizontal engagement part which projects horizontally from the terminal base side is engaged with the upper surface of the shelf part formed on the battery case. Therefore, the battery case is vertically located relative to the terminal base.

Preferably, the engagement recess as the battery case side engagement part includes a wall part coinciding generally with a locus of movement of the peak portion of the engagement projection, in the course of inclining the battery case from the tentatively placed position to a completely mounted position.

This arrangement ensures that when the battery case is tilted from the tentatively placed position to the completely mounted position, the change in posture can be achieved by putting the peak portion of the engagement projection along the wall part of the battery case engagement part.

Preferably, a lower surface of the battery case is formed with a fitting hole, into which a projection part provided on an upper surface of the terminal base fits when the battery case is in a completely mounted position.

With this arrangement, the battery case is properly positioned on the terminal base.

Preferably, a battery cover is attached to the terminal base, the battery cover covering a lateral half of the battery case when the battery case is in a completely mounted position, the battery case engagement part being provided on the other lateral half of battery case.

Thus, the terminal base and half of the battery case are covered by the battery pack cover when the power supply device is mounted on the vehicle. Electrical connection terminals provided on the terminal base can be covered and protected by the battery pack cover. In addition, when mounting the power supply device to the vehicle, visual checking of the positional relationship between the battery case engagement parts and the vehicle body engagement part is not obstructed by the battery pack cover.

The invention also extends to an electric vehicle with a power supply device as specified above.

A preferred embodiment of the invention will now be described by way of example only and with reference to the accompanying drawings, in which:
Fig. 1 is a right side view of a part of an electric vehicle provided with a power supply device according to an embodiment of the present invention;
Fig. 2 is a left side view of a part of the electric vehicle provided with the power supply device according to the embodiment of the present invention;
Fig. 3 is a perspective view of a part of the electric vehicle, as viewed from a right front side;
Fig. 4 is a perspective view of a lock device, as viewed from a right upper side of the vehicle body;
Fig. 5 is a sectional view showing a section passing through a lock pin of the lock device, as viewed from the right side of the vehicle body;
Fig. 6 is a perspective view of a battery pack accommodated in a battery pack cover, as viewed from a right upper rear side of the vehicle body;
Fig. 7 is a perspective view of a terminal base fixed to the battery pack cover, as viewed from a right upper rear side of the vehicle body;
Fig. 8 is a perspective view of the terminal base with an insulator board fitted therein, as viewed from a right upper rear side of the vehicle body;
Fig. 9 is a perspective view of the terminal base, as viewed from a left lower rear side of the vehicle body;
Fig. 10 is a perspective view of the battery pack, as viewed from a left upper rear side of the vehicle body;
Fig. 11 is a perspective view of the battery pack, as viewed from a left lower front side of the vehicle body;
Fig. 12 is a view of a front part of a battery case, as viewed from the rear of the vehicle;
Fig. 13 is a view of a rear part of the battery case, as viewed from the front of the vehicle;
Fig. 14 is a view of the battery case, as viewed from the left side of the vehicle;
Fig. 15 is an enlarged perspective view of a part of the battery case;
Fig. 16 is a perspective view of a part of the battery case, as viewed from a left lower front side;
Fig. 17 is a similar perspective view of the same part with a fuse and a female-side terminal and an insulator block mounted thereto;
Figs. 18A to 18D are views showing the positional relationship between the battery pack and the terminal base during the mounting of the battery pack to the battery pack cover;
Figs. 19A to 19D are views showing the positional relationship between the battery pack cover as well as the terminal base and the battery pack, as viewed from a right upper rear side of the vehicle body, corresponding to Figs. 18A to 18D;
Fig. 20 is a view of a male-side terminal unit from the right side of the vehicle body;
Fig. 21 is a perspective view of the male-side terminal unit from a rear right lower side of the vehicle body;
Fig. 22 is a plan view of the male-side terminal unit;
Fig. 23 is a view of the male-side terminal unit from the front side of the vehicle body;
Fig. 24 is a perspective view of an insulator block 74 with female-side terminals accommodated therein, as viewed from a right lower front side of the vehicle body;
Fig. 25 is a perspective view of the insulator block with the female-side terminals accommodated therein, as viewed from a left upper rear side;
Fig. 26 is a sectional view of the insulator block, as viewed from the left side of the vehicle body, showing contact parts of the female-side terminals;
Figs. 27A to 27E are sectional views showing the positional relationship between the male-side terminal and the female-side terminal, as viewed from the rear side of the vehicle body;
Fig. 28 shows an enlarged view of a part of Fig. 27E; and
Fig. 29 is a right side view of a part of a motorcycle provided with an under frame.

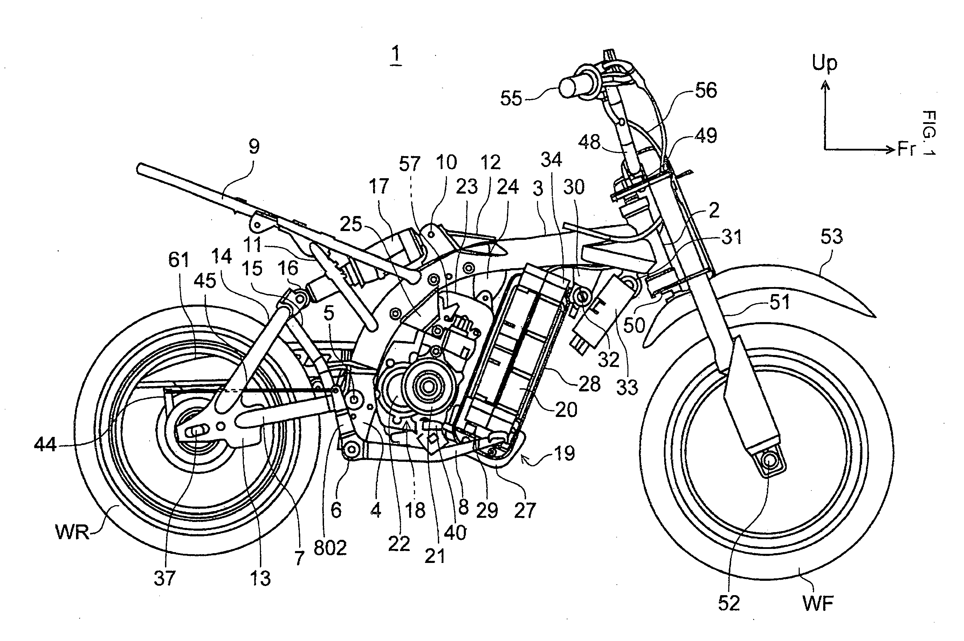

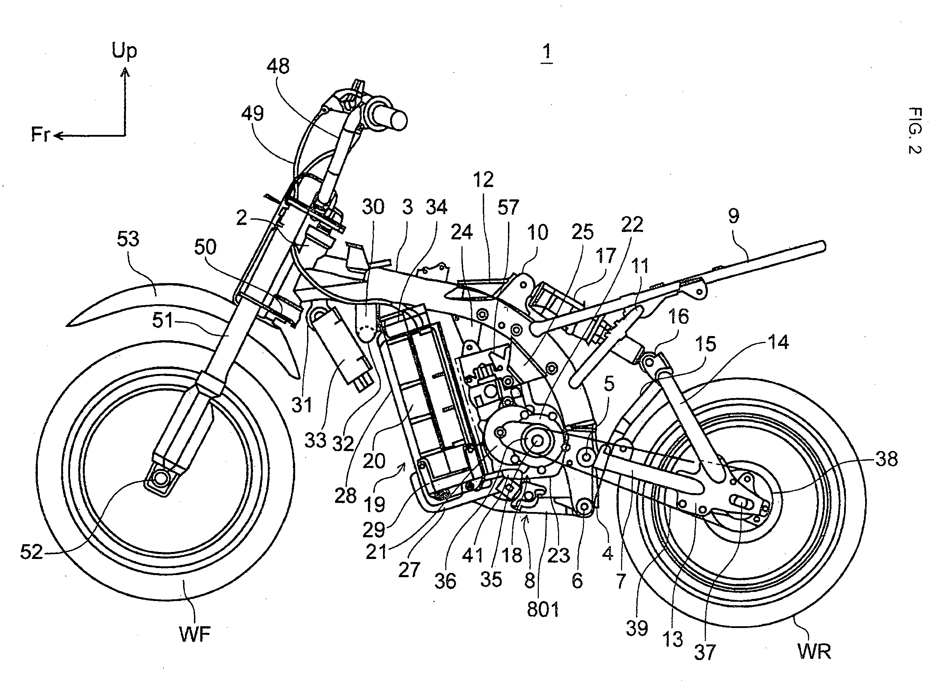

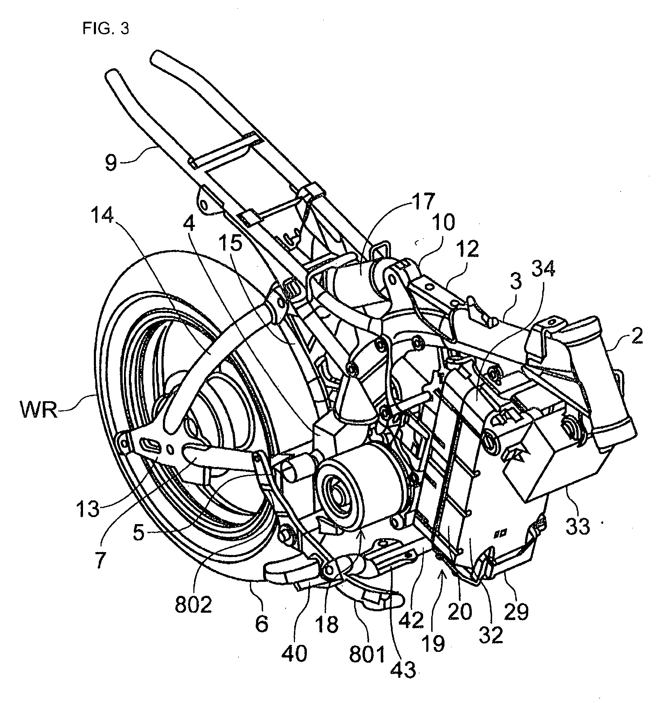

A preferred mode for carrying out the present invention will now be described with reference to the drawings. Fig. 1 is a right side view of a part of an electric vehicle provided with a power supply device according to an embodiment of the present invention; Fig. 2 is a left side view of the same; and Fig. 3 is a perspective view of a part of the electric vehicle as viewed from a right front side. A rider seat and cowls and the like are omitted from the drawings, to allow easier understanding of the configuration of the embodiment. In the drawings, the front of the electric vehicle 1 will be denoted by reference sign Fr, the rear by reference sign Rr, the left by reference sign L, the right by reference sign R, and the upper side by reference sign Up. Unless otherwise defined, the directions (sides) as used herein are with respect to the electric vehicle in use.

The electric vehicle 1 is a motorcycle of an off-road type in which an electric motor is used as a drive source (hereafter, the "electric vehicle" is referred to as a "motorcycle"). The motorcycle 1 has a main frame 3 which is joined to a head pipe 2 at a front end thereof and which extends downwards and rearwards. The main frame 3 has a monocoque body composed of an upwardly curved single pipe. The main frame 3 can be formed of any suitable material, and may be integrally formed with the head pipe 2.

Pivot plates 4 are joined to a lower rear portion of the main frame 3, and the pivot plates 4 are provided with a pivot 5 and a pivot 6 extending in the lateral (width) direction of the vehicle. The pivot 5 supports a pair of left and right swing arms 7 in a vertically swingable manner. The pivot 6, which is located below the pivot 5, supports a rear brake pedal 8, which is disposed on the right side of the electric motorcycle 1, in a vertically swingable manner. At a lower end portion of the pivot plate 4, a side stand (not shown) can be pivotally supported on the left side of the electric motorcycle 1.

A pair of left and right seat frames 9 and shock absorber front support brackets 10 are joined to a curved intermediate portion of the main frame 3. The shock absorber front support brackets 10 are reinforced with a stay 12. The seat frames 9 are joined to the main frame 3 at their front end portions, and extend toward the rear of the vehicle body. Sub frames 11 are provided, which are each joined to the main frame 3 and the seat frame 9 at front and rear ends thereof. The seat frames 9 are supported from below and reinforced by the sub frames 11.

Rear wheel support plates 13 are joined respectively to rear portions of the left and right swing arms 7. Furthermore, rear end portions of left and right sub pipes 14 are joined to upper portions of the rear wheel support plates 13, and the left and right sub pipes extend toward the front side of the vehicle body. Between the sub pipe 14 and the swing arm 7, a connection tube 15 is provided which interconnects them. A shock absorber rear support bracket 16 is joined to an upper portion of the sub pipe 14. A rear shock absorber 17 is provided, and is pivotally supported by the shock absorber front support brackets 10 and the shock absorber rear cushion support brackets 16. A rider seat (not shown) is mounted on the seat frames 9 and the main frame 3.

A driving device 18 is provided on the main frame 3, and a battery pack 19 provided on the main frame 3 and located forwardly of the driving device 18 serves as a power supply device. The battery pack 19 includes a plurality of battery cells (not shown) accommodated in a battery case 20. The driving device 18 includes an electric motor 21 and a reduction gear 22, and is covered with a driving device case (hereafter referred to as "motor case") 23. As the driving device 18 is covered with the motor case 23, it should be drawn in broken lines; however, for simplicity and to allow better understanding of its shape, the driving device 18 is shown in solid lines. The motor case 23 is connected to hanger brackets 24 and 25 and a pivot plate 4, whereby it is suspended at three positions. The battery pack 19 includes: a battery pack holding stay 27 connected to a lower portion of the motor case 23 and extending forward from the motor case 23; a battery pack cover 28 fixed to the battery pack holding stay 27; and a terminal base 29 fixed to a lower portion of the battery pack cover 28.

A lock device support stay 30 and a PDU bracket 31, which protrude downward, are joined to front portions of the main frame 3. A lock device 32 is mounted to the lock device support stay 30, which is located immediately forwardly of the battery pack 19, and a PDU (power drive unit) 33 is mounted to the PDU bracket 31, which is located near the head pipe 2. The PDU 33 is supplied with electric power from the battery pack 19, and performs digital phase control for the electric motor 21 in accordance with battery information (remaining battery power and the like), detection signals from various switches and sensors and the like provided on the motorcycle 1, and so on.

A handle 34 which can be used for carrying the battery pack 19 is provided at an upper portion located on the front right side of the battery case 20 of the battery pack 19. The handle 34 is formed with a lock pin engagement part for engagement with a lock pin which projects from the lock device 32; the lock pin and the lock pin engagement part will be described in detail later.

A driving sprocket 36 is connected to an output shaft 35 of the reduction gear 22. A rear wheel WR (which is a driven wheel) is supported on the rear wheel support plates 13 through a rear axle 37, and a driven sprocket 38 is connected to the rear axle 37. A drive chain 39 is arranged between the driving sprocket 36 and the driven sprocket 38, and the power of the electric motor 21 (reduced in speed by the reduction gear 22) is transmitted to the rear axle 37 through the driven sprocket 38. The drive chain 39 is provided with a chain cover 61 (shown in Fig. 1), which covers an upper portion thereof. Incidentally, the rear axle 37 and the driven sprocket 38 are interconnected through a one-way clutch, so that the power of the electric motor 21 is only transmitted to the rear wheel WR in the direction for forward motion of the motorcycle 1.

A step bar 42 extends in the lateral direction of the vehicle, and steps 40 and 41 on which the rider can put his or her feet are attached to the right and left ends of the step bar 42. The step bar 42 is attached to a bottom surface of the motor case 23 through a bracket 43. The rear brake pedal 8 which is supported on the pivot 6 includes a front arm part 801 operated by the rider's foot, and a rear arm part 802 which is connected through a brake cable 45 to an operation arm 44 of a rear brake (not shown) provided on the rear axle 37.

A steering shaft (not shown) extends generally vertically through the head pipe 2 and is turnably supported. A pair of vertically extending front forks 51 are connected to a top bridge 49 and a bottom bridge 50 which are connected respectively to upper and lower portions of the steering shaft. A front axle 52 extending in the lateral direction of the vehicle is supported by the lower ends of the front forks 51, and a front wheel WF is rotatably supported on the front axle 52. A front fender 53 located above the front wheel WF is mounted to the front forks 51.

A steering handlebar 48 is supported on the top bridge 49, and is provided with an accelerator grip 55. An accelerator cable 56 is connected to the accelerator grip 55. A turning amount of the accelerator grip 55 (accelerator position) is transmitted through the accelerator cable 56 to an accelerator position sensor (APS) 57 provided inside the motor case 23.

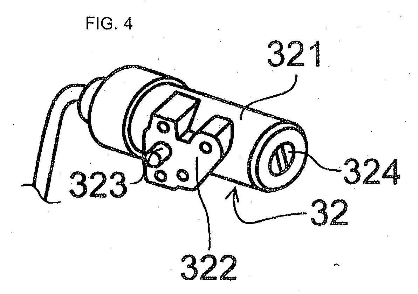

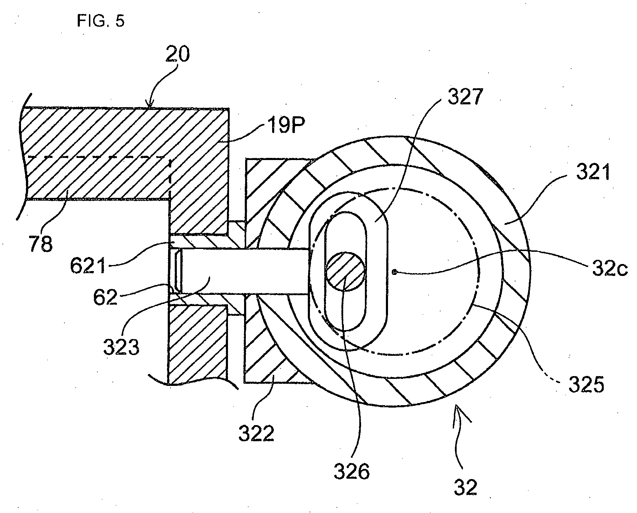

Fig. 4 is a perspective view of the lock device 32 as viewed from a right upper rear side of the vehicle body, and Fig. 5 is a sectional view showing a section passing through the lock pin of the lock device 32, as viewed from the right side of the vehicle body. The lock device 32 includes a cylinder part 321 having a hollow cylindrical shape, a lock pin guide 322 projecting rearwardly from one side of the cylinder part 321, and a movable lock pin 323 extending orthogonally to the cylinder part 321 and passing through the lock pin guide 322.

The cylinder part 321 is formed at its right end portion with a key hole 324, and a key (not shown) can be inserted in the key hole 324. A configuration is adopted wherein when the key is turned in a direction to turn the power supply on (for example, clockwise), the lock pin 323 is moved to project from the cylinder part 321, and when the key is turned in a direction to turn the power supply off, the lock pin 323 is retracted towards the cylinder part 321.

A mechanism for conversion of the rotating motion of the key into longitudinal (forward and rearward) motion of the lock pin 323 includes an inner tube disk 325 provided coaxially with the cylinder part 321, as shown in Fig. 5. In this mechanism, an eccentric shaft 326 provided on the inner tube disk 325 is engaged with an end portion (an annular portion protruding into the inside of the cylinder) 327 of the lock pin 323, so that the lock pin 323 can be made to project and retract according to the amount of eccentricity of the eccentric shaft 326 relative to the rotational centre 32c of the inner tube disk 325. The lock device 32 is mounted to the lock device support stay 30, and is positioned such that when the lock pin 323 projects, it is loosely fitted in an engagement hole 62 formed in the battery case 20. Of course, the advancing-and-retracting mechanism for the lock pin 323 is not restricted to the structure shown in Fig. 5, and can be replaced by any suitable mechanism.

The battery case 20 is preferably formed from a resin, from the viewpoint of reduced weight and easier production. For reinforcing the engagement hole 62, therefore, a reinforcement ring 621 made of metal, for example, may be fitted in the inner circumference of the engagement hole 62.

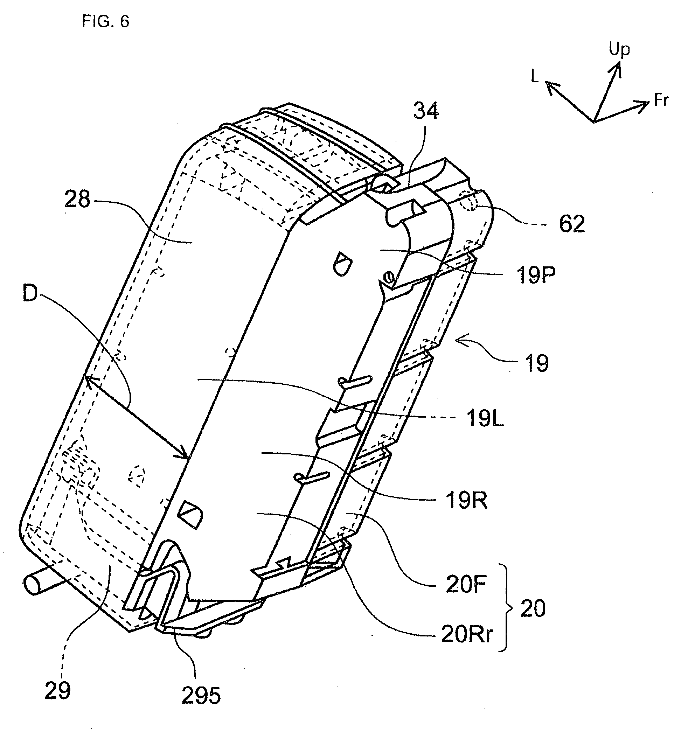

Fig. 6 is a perspective view of the battery pack 19 accommodated in the battery pack cover 28, as viewed from a right upper rear side of the motorcycle 1. The battery pack cover 28 has a shape that would be obtained by removing one surface (the surface on the right side of the vehicle body) of six surfaces which constitute a substantially rectangular parallelepiped shape. A depth D (the dimension in the lateral direction of the vehicle body) of the battery pack cover 28 is so set that the battery pack cover 28 covers only roughly the left half 19L of the battery pack 19. Therefore, roughly a right half 19R of the battery pack 19 is not covered by the battery pack cover 28, so that the right-side external appearance of the battery pack 19 can be seen externally.

The terminal base 29 is fixed to a bottom portion of the battery pack cover 28. The terminal base 29 is provided with a battery pack support part 295 which is engaged with a lower surface portion at a right side of the battery pack 19, namely, at its right half 19R (the half not covered with the battery pack cover 28).

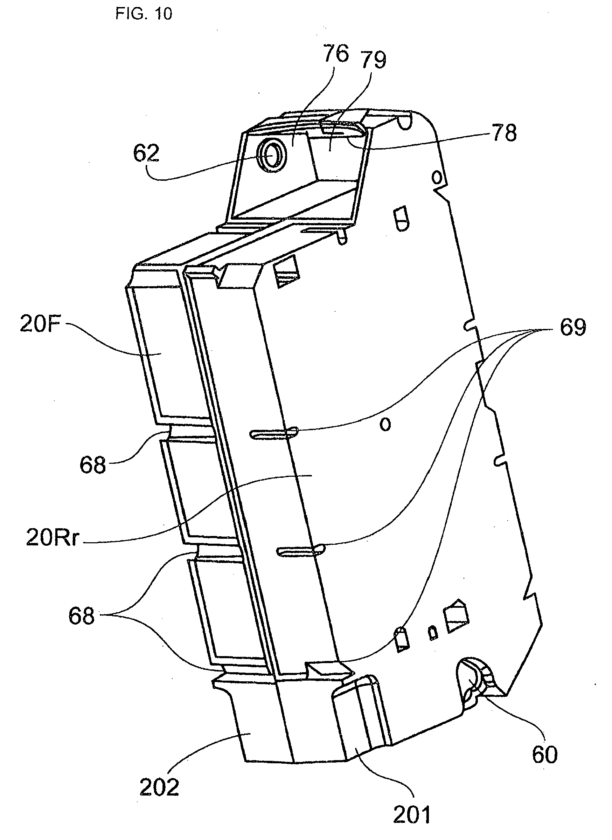

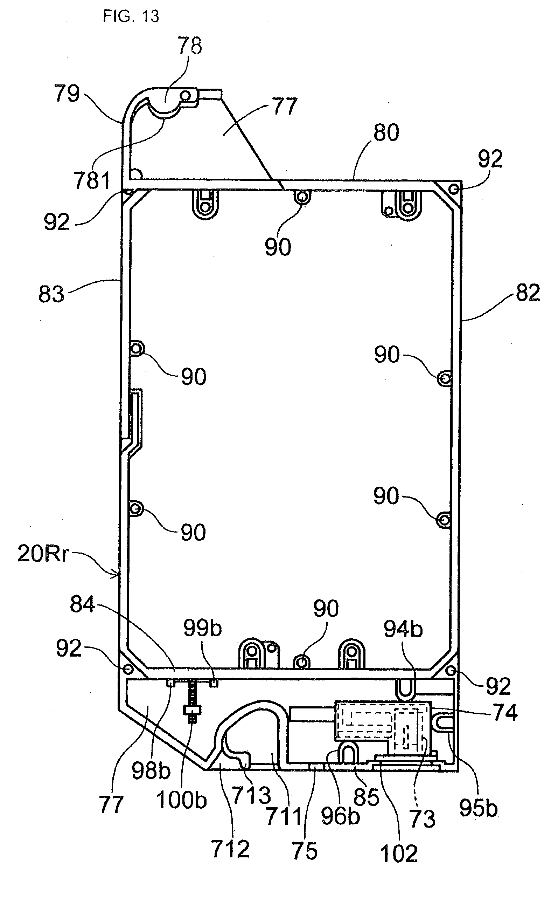

An upper portion of the right half 19R of the battery pack 19 extends above an upper end portion of the battery pack cover 28. This upper side extension 19P is provided with a recess which is recessed to the right from a part on the vehicle body left side. An upper wall forming the recess constitutes a grip part of the handle 34, and can be hooked by finger tips. The recess and the grip part constituting the upper wall of the recess will be described later, with particular reference to Figs. 10 and 13.

The battery case 20 of the battery pack 19 is composed of a front part 20F and a rear part 20Rr, such that the battery case 20 is bisected in the longitudinal direction of the vehicle. A front side surface of the front part 20F which forms the upper side extension 19P is formed with the engagement hole 62 in which the lock pin 323 projecting from the lock device 32 can be loosely fitted. The engagement hole 62 is formed in a wall surface of the front part 20F of the battery case 20, which is orthogonal to the grip part (described later) of the handle 34.

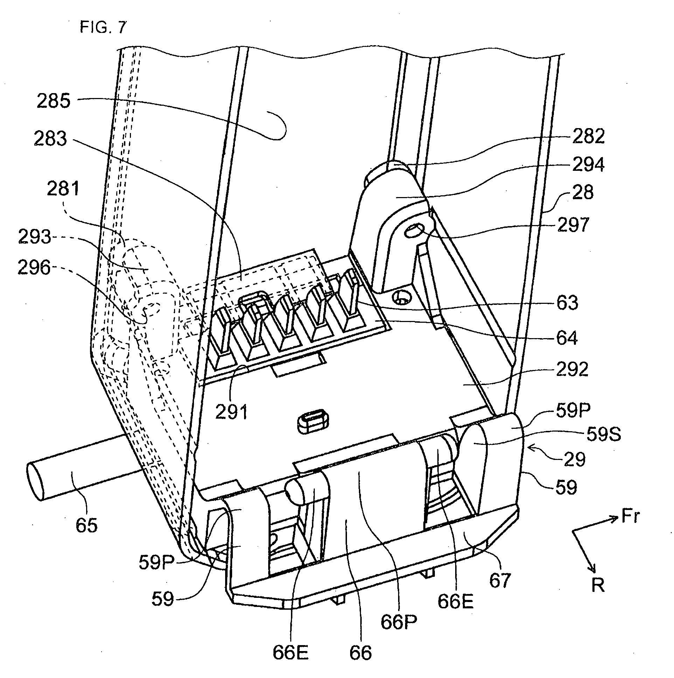

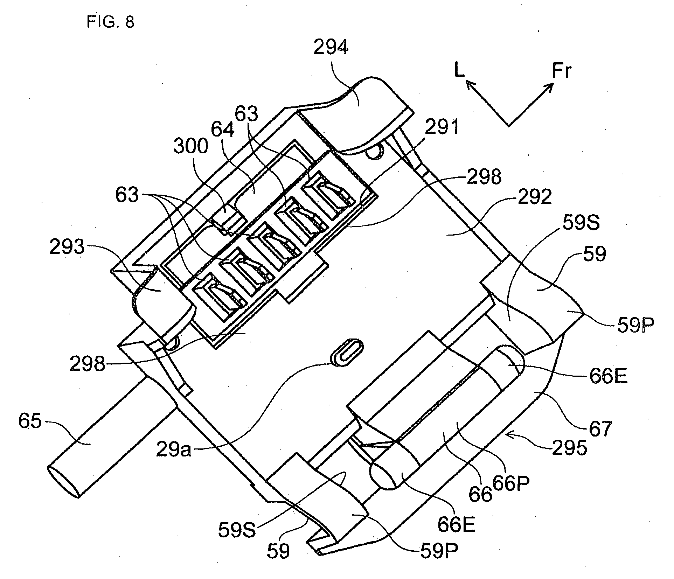

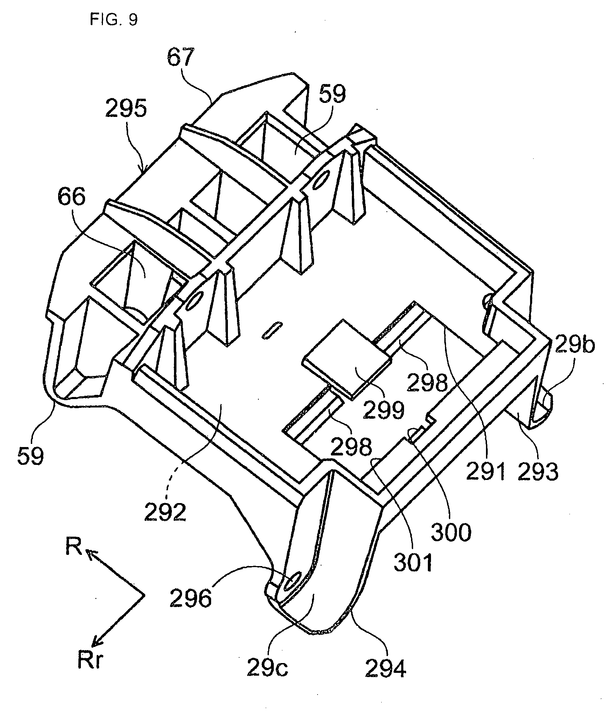

Fig. 7 is a perspective view of the terminal base 29 fixed to the battery pack cover 28, Fig. 8 is a perspective view of the terminal base 29 with an insulator board 64 fitted therein, as viewed from a right upper rear side of the vehicle body, and Fig. 9 is a perspective view of the terminal base 29 as viewed from a left lower rear side of the vehicle body. The terminal base 29 includes: a base 292 provided with an opening 291, into which can be fitted the insulator board 64 having mounted thereto a plurality of male terminals 63 arranged in a row in the longitudinal direction of the vehicle; mounting parts 293 and 294 protruding to the upper side of the base 292 and longitudinally spaced at a left side portion; and a battery pack support part 295 extending to the right in relation to the base 292. Between the opening 291 and the battery pack support part 295, a projecting part 29a for engagement with a bottom surface of the battery case 20 is formed on the base 292.

The mounting parts 293 and 294 are provided with inner circumferential surfaces 29b and 29c (see Fig. 9), to be located over bosses 281 and 282 formed at a left side of the battery pack cover 28. The mounting parts 293 and 294 are formed with bolt holes 296 and 297 extending in the lateral direction of the vehicle. Bolts or setscrews (not shown) can be passed through the bolt holes 296 and 297 from the right and screw engaged with screw holes (not shown) formed in the bosses 281 and 282 protruding from the battery pack cover 28, so that the terminal base 29 can be fixed to the battery pack cover 28.

On both longitudinal sides of the right edge of the opening 291, upper guides 298, 298 are formed to project along the upper surface of the base 292. In addition, the right edge of the opening 291 is provided with a lower guide 299 located between the upper guides 298, 298, and formed to project along the lower surface of the base 292. On the other hand, on both longitudinal sides of the left edge of the opening 291, a lower guide 301 is formed to project along the lower surface of the base 292. Further, at a longitudinally central portion of the left edge of the opening 291, a stopper 300 projects from the upper surface of the base 292.

A harness 65 is connected to the male terminals 63 and is led out towards the driving device 18. In the case of mounting the insulator board 64 to the base 292, the harness 65 is passed through the opening 291 from the upper side of the base 292 of the terminal base 29 to the lower side of the base 292. Then, while clamping one edge (the right edge) of the insulator board 64 between the upper guides 298, 298 and the lower guide 299, the lower surface of another edge (the left edge) of the insulator board 64 is brought into contact with the lower guide 301, and the stopper 300 is engaged with the upper surface, thereby fixing it. In Fig. 7, the battery pack cover 28 is formed with a rib 283 positioned between the bosses 281 and 282 and near the base 292. The rib 283 protrudes from a wall part (here, the left side wall 285) toward the right side. The position of the rib 283 relative to the terminal base 29 mounted in the battery pack cover 28 is set so that the rib 283 can cover the left edge of the insulator board 64 from above. The rib 283 contributes to a firmer positioning of the insulator board 64, which is locked to the terminal base 29 by the stopper 300, whereby the insulator board 64 is restrained from moving upward.

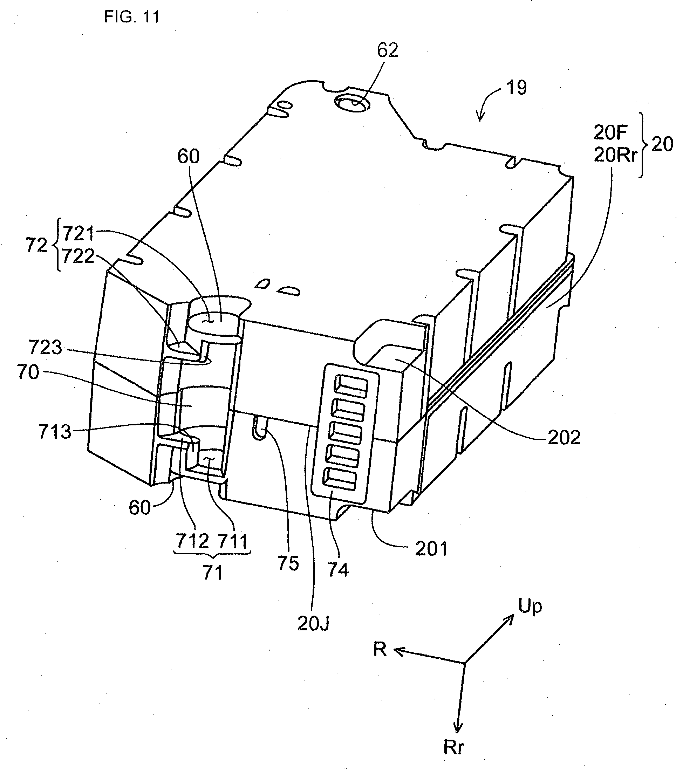

The battery support part 295 is provided with two end engagement projections 59, 59 aligned in the longitudinal direction, and with a central engagement projection 66 located between the end engagement projections 59, 59. The end engagement projections 59, 59 and the central engagement projection 66 are "vehicle body side engagement parts," and are provided at positions which are laterally offset to one side (in this example, to the right) from the vehicle body centre. The central engagement projection 66 is provided with a peak portion 66P including a cylindrical stopper 66E projecting towards the sides of the end engagement projections 59, 59 and which engages with the battery case 20 as will be described later. In spaces formed between the end engagement projections 59, 59 and the central engagement projection 66, ribs 711 and 712 (described later referring to Fig. 11) formed on a bottom portion of the battery case 20 are to be inserted. When mounting the battery pack 19 to the terminal base 29, mutually facing side surfaces 59S, 59S of the end engagement projections 59, 59 come into contact with side surfaces of the ribs 711 and 712 on the battery case 20, which are inserted between the end engagement projections 59, 59 and the central engagement projection 66. Thus, the side surfaces 59S, 59S can serve to guide the ribs 711 and 712 when mounting the battery pack 19 to the terminal base 29, and to position (and align) the battery pack 19 in the longitudinal direction of the vehicle.

The upper portion shapes of the peak portions 59P and 66P of the end engagement projections 59, 59 and the central engagement projection 66 are the same circular arc shape, and they are aligned in the longitudinal direction of the battery pack 19. Right-side foot portions of the end engagement projections 59, 59 and the central engagement projection 66 form a shelf 67, whereby the end engagement projections 59, 59 and the central engagement projection 66 are interconnected at their lower portions. As will be described later, the shelf 67 provides a base on which the battery pack 19 can be tentatively put at the time of mounting or detaching the battery pack 19 to or from the battery pack cover 28.

Fig. 10 is a perspective view of the battery pack 19 as viewed from a left upper rear side of the vehicle body, and Fig. 11 is a perspective view of the battery pack 19 as viewed from a left lower front side of the vehicle body. In Figs. 10 and 11, the front part 20F and the rear part 20Rr of the battery case 20 are coupled to each other by bolts or setscrews, to form the battery case 20 as a sealed casing.

At a circumferential edge of a surface (the front surface when the battery pack 19 is mounted on the vehicle) of the front part 20F of the battery case 20, notches 68 as relief portions for passing bolts or setscrew therethrough are formed in a plurality of positions. In addition, at a circumferential edge of the rear part 20Rr corresponding to the notches 68, screw holes 90 (described later with reference to Fig. 13) with which the bolts or setscrews passed from the front part 29F side are to be screw engaged are formed. In order not to elongate the screw holes 90 more than necessary, notches 69 are formed at the circumference of the rear part 20Rr. The screw holes are formed in the part near the front part 20F exclusive of the notches 69.

Lower corner parts 201 and 202 of the battery case 20 are recesses, which are cut out so as to avoid the mounting parts 293 and 294 formed on the terminal base 29. Further, at lower side surfaces (front and rear surfaces when the battery pack 19 is mounted on the vehicle) of the battery case 20, end engagement recesses 60 adapted to fit the end engagement projections 59, 59 of the battery support part 295 and a central engagement recess 70 adapted to fit the central engagement projection 66 of the battery support part 295 are formed. The end engagement recesses 60 and the central engagement recess 70 correspond to "battery case side engagement part." The end engagement recesses 60 and the central engagement recess 70 are partitioned by ribs 71 and 72 projecting from the bottom of the battery case 20. The ribs 71 and 72 are generally parallel to joint surfaces 20J of the front part 20F and the rear part 20Rr of the battery case 20. The ribs 71 and 72 each have two parts 711 and 712, and 721 and 722, and a step portion which is bent so as to extend orthogonal to the joint surfaces 20J.

Of the parts 711 and 712 of the rib 71 and the parts 721 and 722 of the rib 72, those parts 711 and 721 which are located on the outer side (here, the terms "inner" and "outer" are relative to the central plane 20J) make contact with the inside surfaces 59S, 59S (see Fig. 8) of the end engagement projections 59, 59. On the other hand, those parts 712 and 722 which are located on the inner side make contact with a downwardly extending outside portion of the peak portion 66P. The parts 711 and 712 of the rib 71 which make contact with the inside surfaces 59S, 59S of the battery case 20 function as a guide for restraining the position of the battery pack 19 in the longitudinal direction of the vehicle relative to the terminal base 292. A link part 713 linking the parts 711 and 712 of the rib 71 to each other and a link part 723 linking the parts 721 and 722 to each other are provided. The link parts 713 and 723 are each arc-shaped in side view of the battery pack 19 (a front or rear view with respect to the vehicle), and their inner circumferential surfaces (surfaces located near the upper side of the battery pack 19) are engaged with the stopper 66E of the central engagement projection 66 when the battery pack 19 is mounted on the terminal base 29.

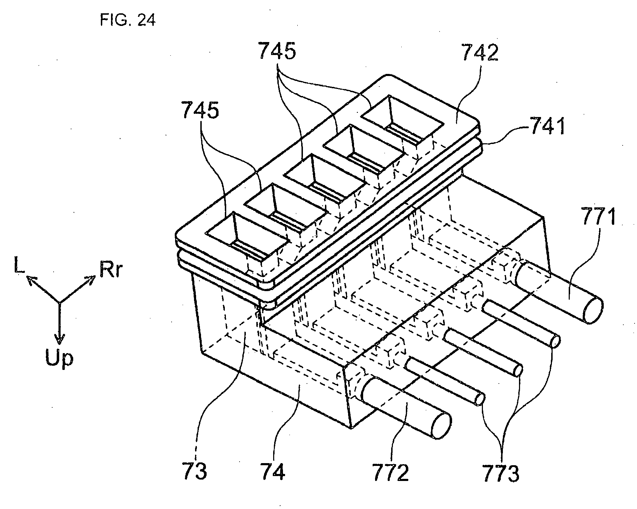

An insulator block 74 is mounted to a bottom portion of the battery case 20. The insulator block 74 is provided with female-side terminals 73 (described in detail later with reference to Figs. 24 to 26 etc.) into which can be inserted the male-side terminals 63 attached to the terminal base 29. The insulator block 74 can be formed from an electrically insulating elastic material, such as rubber or resin. The insulator block 74 is held between the front part 20F and the rear part 20Rr of the battery case 20, without using any fastening members such as bolts or setscrews. The mode of holding will be described later. The front part 20F of the battery case 20 is provided in its bottom portion with a cutout 75 into which can fit the projected part 29a formed on the terminal base 292. The cutout 75 is open on one side, and serves as a hole (fitting hole) into which can fit the projected part 29a.

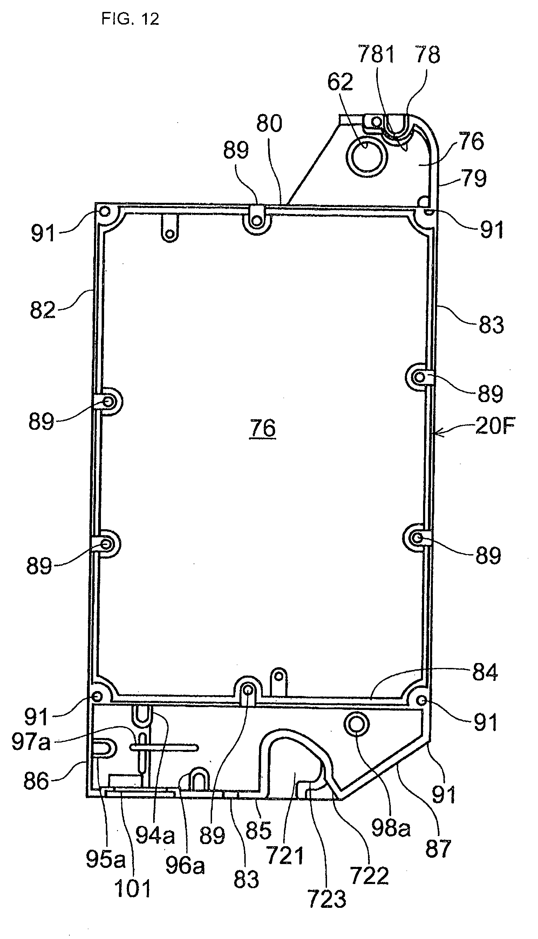

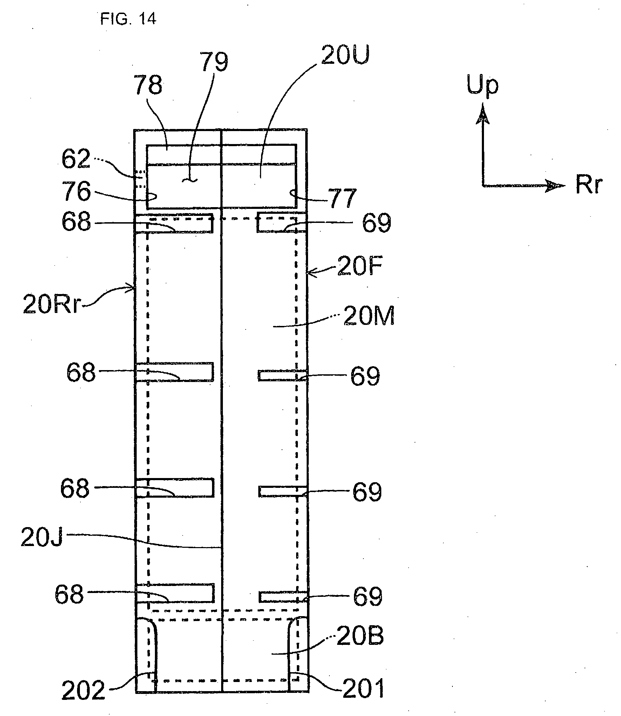

Fig. 12 is a view of the front part 20F of the battery case 20, as viewed from the rear of the vehicle, Fig. 13 is a view of the rear part 20Rr of the battery case 20, as viewed from the front of the vehicle, and Fig. 14 is a view of the battery case as viewed from the left side of the vehicle body. The front part 20F and the rear part 20Rr of the battery case 20 form an upper chamber 20U, a middle chamber 20M and a bottom chamber B (see Fig. 14) when combined with each other. Incidentally, Fig. 13 shows a condition where the insulator block 74 with the female-side terminals 73 accommodated therein is held in the bottom chamber 20B.

The upper chamber 20U is formed as a recess which is surrounded by a front wall 76 and a rear wall 77, an upper wall 78 constituting the grip part of the handle 34, a vertical wall 79 extending downward from the upper wall 78, and an upper wall 80 of the middle chamber 20M, and which is opened on one side (the left side of the vehicle). The grip part, or the upper wall 78, has a partially cylindrical projection 781 which extends in the front-rear direction of the battery pack 19 (substantially the same direction as the longitudinal direction of the vehicle), which can be hooked by a user's fingers, and which projects downwards. The engagement hole 62 in which the lock pin can fit is formed in the front wall 76 of the front part 20F, at a position separated from the grip part 78.

The middle chamber 20M is a chamber which can accommodate a plurality of battery cells (not shown). The middle chamber 20M is surrounded by the front wall 76 and the rear wall 77, the upper wall 80, left and right walls 82 and 83, and a bottom wall 84 (which is common with an upper wall of the bottom chamber 20B).

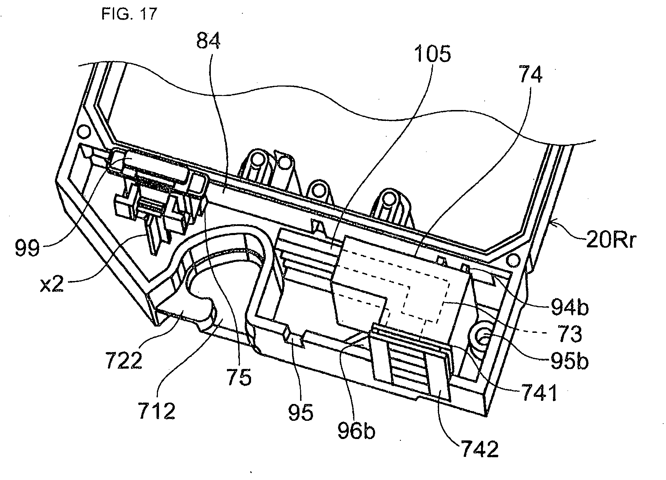

The bottom chamber 20B is surrounded by the front wall 76 and the rear wall 77, the upper wall 84 (which is common with the bottom wall of the middle chamber 20M), a bottom wall 85, a left wall 86 and a right wall 87. The bottom chamber 20B is a chamber which can accommodate the female-side terminals 73, the insulator block 74, and a fuse 88. The fuse 88 will be described later, with reference to Fig. 17.

The front part 20F of the battery case 20 is provided with screw passing holes 89 through which bolts or setscrews can be passed. The rear part 20Rr of the battery case 20 is formed with screw holes 90 at positions corresponding to the screw passing holes 89. In addition, pins 91 for positioning are located on one of the front part 20F and the rear part 20Rr (here, the front part 20F) of the battery case 20, and the other (here, the rear part 20Rr) is formed with pin holes 92 in which the pins 91 can fit.

In relation to the walls 80, 82, 83 and 84 forming the middle chamber 20M, it is desirable to dispose a packing or seal at the joint surfaces 20J of the front part 20F and the rear part 20Rr.

The front part 20F of the battery case 20 forming the bottom chamber 20B is provided with: a rib 94a projecting from the upper wall 84 into the bottom chamber 20B; a rib 95a projecting from the left wall 86 into the bottom chamber 20B; a rib 96a projecting from the bottom wall 85 into the bottom chamber 20B; and a rib 97a projecting from the front wall 76 into the bottom chamber 20B.

Similarly, the rear part 20Rr of the battery case 20 which forms the bottom chamber 20B is provided with: a rib 94b projecting from the upper wall 84 into the bottom chamber 20B; a rib 95b projecting from the left wall 86 into the bottom chamber 20B; a rib 96b projecting from the bottom wall 85 into the bottom chamber 20B; and a rib 97b projecting from the rear wall 77 into the bottom chamber 20B. The ribs 95a and 95b, the ribs 96a and 96b, and the ribs 97a and 97b are located so as to face each other when the front part 20F and the rear part 20Rr are combined with each other; these ribs cooperate in holding the female-side terminals 73 and the insulator block 74 (described later).

Furthermore, the front part 20F of the battery case 20 which forms the bottom chamber 20B is formed with a boss 98a projecting from the front wall 76. The rear part 20Rr of the battery case 20 is provided with ribs 98b, 99b, and 100b which project into the bottom chamber 20B from the upper wall 84 and the rear wall 77 forming the bottom chamber 20B. The ribs 98b, 99b and 100b cooperate with the boss 98B to hold a fuse 99 (described later) when the front part 20F and the rear part 20Rr are combined with each other.

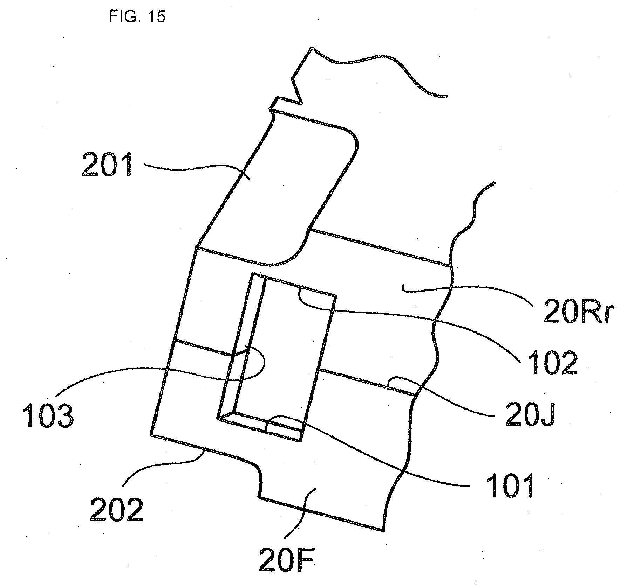

The front part 20F and the rear part 20Rr of the battery case 20 forming the bottom wall 85 of the bottom chamber 20B are formed respectively with cut-outs 101 and 102 for receiving an end portion of the insulator block 74. When the front part 20F and the rear part 20Rr are combined with each other, the cut-outs 101 and 102 form a substantially rectangular opening 103 (see Fig. 15) which can receive and hold an end portion of the insulator block 74.

Fig. 15 is an enlarged view of a part of the battery case 20. As shown in Fig. 15, the cut-outs 101 and 102 formed respectively in the joint surfaces 20J of the front part 20F and the rear part 20Rr form the opening 103 in a bottom portion of the battery case 20.

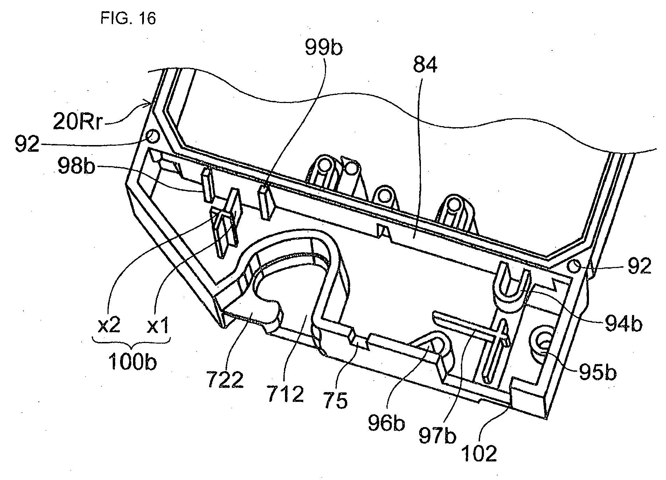

Fig. 16 is an enlarged perspective view of a lower portion of the rear part 20Rr of the battery case 20, and Fig. 17 is an enlarged perspective view of a lower portion of the rear part 20Rr with the fuse 99 and the female-side terminals 73 and the insulator block 74 mounted in position. As can be seen from Fig. 16, the ribs 94b, 95b and 96b each have a partially cylindrical shape, while the rib 97b is cross-shaped as viewed in the longitudinal direction of the vehicle.

Ribs 98b and 99b extend in the longitudinal direction of the vehicle when the battery case 20 is mounted to the vehicle, and they are disposed parallel to each other. Rib 100b is composed of: a part x1 which is parallel to the ribs 98b, 99b and is shorter than the ribs 98b, 99b in height (the dimension along the longitudinal direction of the vehicle when the battery case 20 is mounted to the vehicle body); and a part x2 which has a greater height than the part x1 and is T-shaped as viewed in the longitudinal direction of the vehicle.

In the mounted state as shown in Fig. 17, the fuse 99 is seated on the part x1 of the rib 100, and is held between the ribs 98b, 99b and the T-shaped part x2 of the rib 100b. In addition, the insulator block 74 is seated on the rib 97b shown in Fig. 16, and is held between the partially cylindrical members constituting the ribs 94b, 95b and 96b.

The insulator block 74 holds the female-side terminals 73, and accommodates electric wires 771 and 772 and a signal line 773 (referred to as "harness 105"), which extend from the female-side terminals 73 toward the fuse 99.

The fuse 99 and the insulator block 74 are adjacent to each other, and the harness 105 connected to the female-side terminals 73 extends towards the fuse. Therefore, the length of the harness 105 between the female-side terminals 73 and the fuse 99 can be reduced.

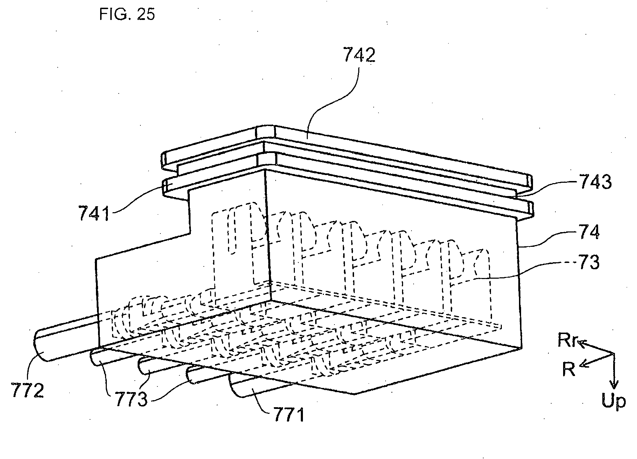

The insulator block 74 is provided with flange parts 741 and 742, by means of which the circumferential edge of the opening 103 (formed by the combination of the cut-outs 101 and 102 provided in the bottom wall 85 of the battery case 20) is clamped from the inside and the outside of the bottom chamber 20B. The outer circumferential shape of that part 743 of the insulator block 74 which is located between the flanges 741 and 742 (see Fig. 25) is set to have such dimensions as to fit the inner circumference of the opening 103.

In this manner, the fuse 99 and the insulator block 74 are simultaneously held in the battery case 20 by combination or assembly of the front part 20F and the rear part 20Rr of the battery case 20, without using any additional fastening parts such as bolts or setscrews.

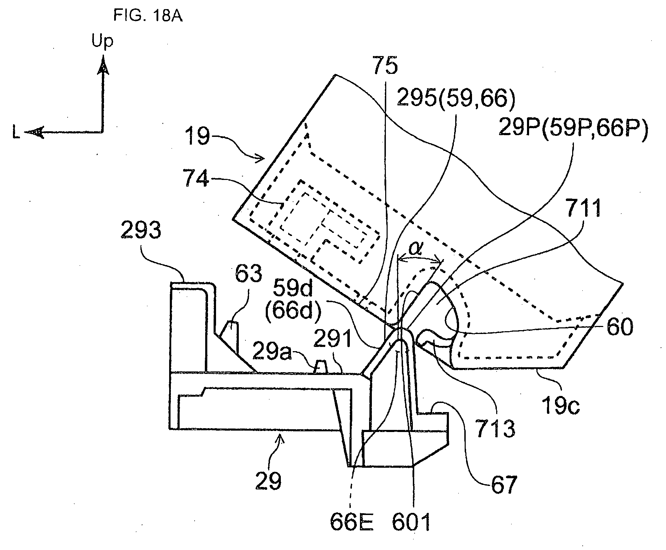

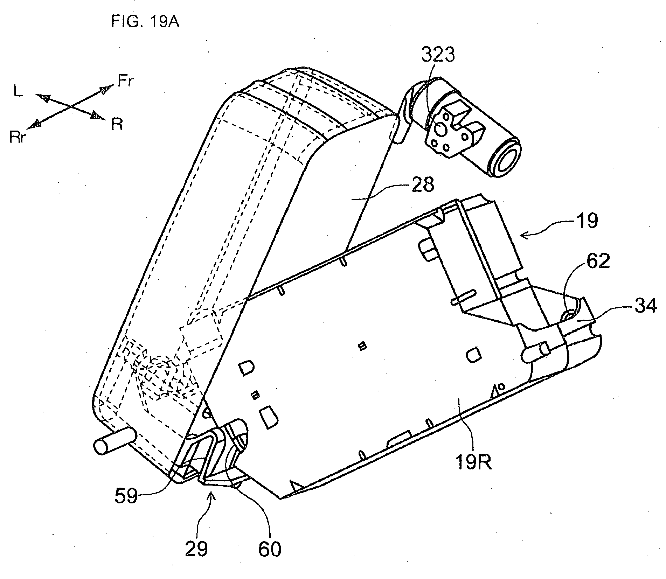

The procedure and operations in mounting the battery pack 19 to the battery pack cover 28 will now be described. Figs. 18A to 18D are views from the rear of the vehicle showing the positional relationship between the battery pack 19 and the terminal base 29 at the time of mounting the battery pack 19 to the battery pack cover 28. Figs. 19A to 19D are views showing the positional relationship between the battery pack cover 28 as well as the terminal base 29 and the battery pack 19, as viewed from a right upper rear side of the vehicle body, corresponding respectively to Figs. 18A to 18D. At the time of an operation of mounting or detaching the battery pack 19, the motorcycle 1 is left standing in a leftwardly inclined posture by use of the side stand. Therefore, the terminal base 29 is not set upright but is inclined to the left by an angle of about 12 degrees, for example. For simplification, however, the motorcycle 1 is shown upright in Figs. 18A to 18D and Figs. 19A to 19D.

In Figs. 18A to 18D, the battery pack support part 295 composed of the end engagement projections 59, 59 and the central engagement projection 66 has slant surfaces 59d, 66d formed to slant down toward the right side of the vehicle from a peak portion 29P (composed of the peak portions 59P, 66P). The slant surfaces 59d, 66d have an angle α relative to the base 292, and the angle α may, for example, be 35 degrees).

First, as shown in Figs. 18A and 19A, the battery pack 19 is brought closer to the terminal base 29 from a right upper side of the vehicle. It is recommended that the user grips the handle 34 with the right hand and supports the part 19R, on the side where the handle 34 is formed, with the left hand. In this case, the battery pack 19 is brought closer to the terminal base 29 in such a manner that the vertical walls of the end engagement recesses 60 and the central engagement recess 70 formed by the rib 71 and the rib 72 provided at a bottom portion of the battery case 20 (the vertical wall 601 of the end engagement recess 60 is taken as a representative of these vertical walls in the description here) are directed substantially along the slant surfaces 59d, 66d of the battery pack support part 295, and the peak portion 29P of the battery pack support part 295 is opposed to the end engagement recesses 60 and the central engagement recess 70 from the lower side of the battery pack 19.

Incidentally, as described referring to Fig. 11, the rib 71 is composed of the parts 711 and 712, while the rib 72 is composed of the parts 721 and 722. In addition, the peak portion of the battery pack support part 295 is composed of the peak portions 59P and 66P.

In the position shown in Fig. 18A and Fig. 19A, the battery pack cover 28 is only covers one side of the terminal base 29 (the side on the left of the vehicle and on which the male-side terminals 63 are provided), and does not cover the battery pack support part 295. This allows the user to clearly recognize visually the positional relationship between the end engagement projections 59 and the end engagement recesses 60.

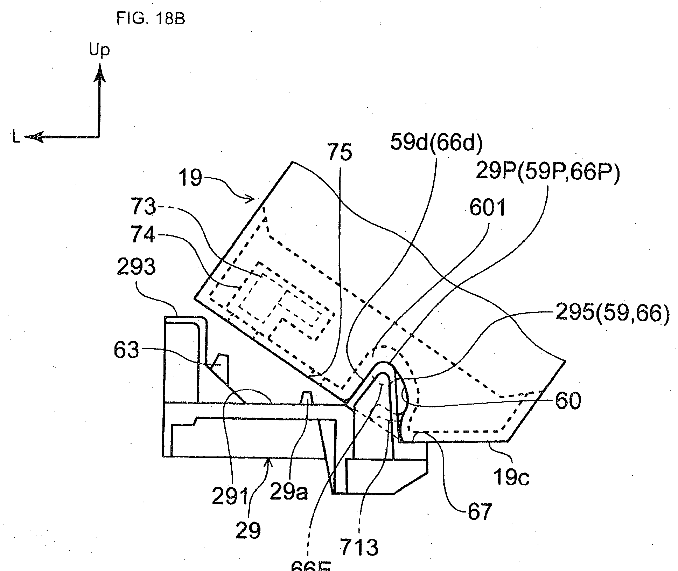

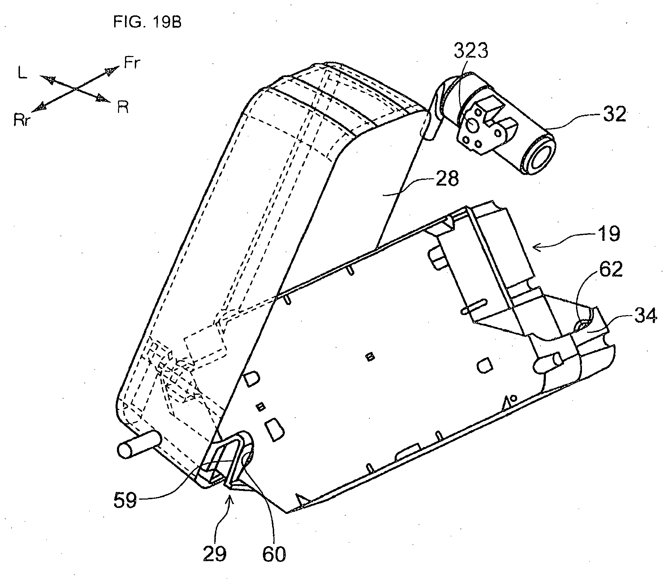

Next, starting from the posture as shown in Figs. 18A and 19A, the hand supporting the battery pack 19 is slightly loosened. As a result, the battery pack 19 slides downward on the vertical wall 601 along the slant surfaces 59d, 66d, to be moved into the position as shown in Figs. 18B and 19B. In the position as shown in Figs. 18B and 19B (the tentatively placed position), the peak portion 29P of the battery pack support part 295 has reached a point at which it makes contact with the internal surface of the uppermost portions of the end engagement recesses 60. In this case, a surface 19c formed by cutting off a corner of a bottom portion of the battery pack 19 (the corner located on the right relative to the vehicle body) makes contact with the upper surface of the shelf 67 of the battery pack support part 295. Incidentally, at a lower surface of the battery case 20 (which is generally shaped as a roughly rectangular parallelepiped), the slant surface 19c extends from the lower open end portions of the end engagement recess 60 and the central engagement recess 70 toward the surface adjacent to the lower surface which is adjacent on the side of protrusion of the shelf 67.

Therefore, in this position, it is ensured that even if the operator further loosens the hand supporting the battery pack 19, the battery pack 19 is tentatively placed on the terminal base 29 by only lightly supporting the battery pack 19. Thus, during the operation of mounting the battery pack 19 (which is comparatively heavy), the hand gripping the battery pack 19 can be loosened, which is effective in alleviating the burden in the mounting operation.

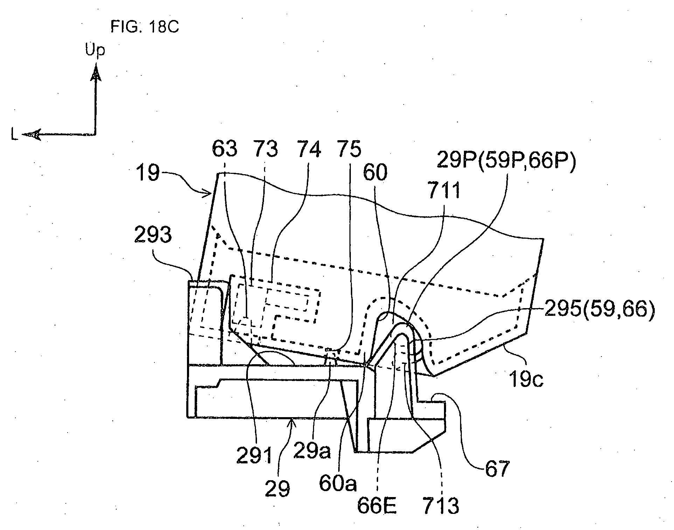

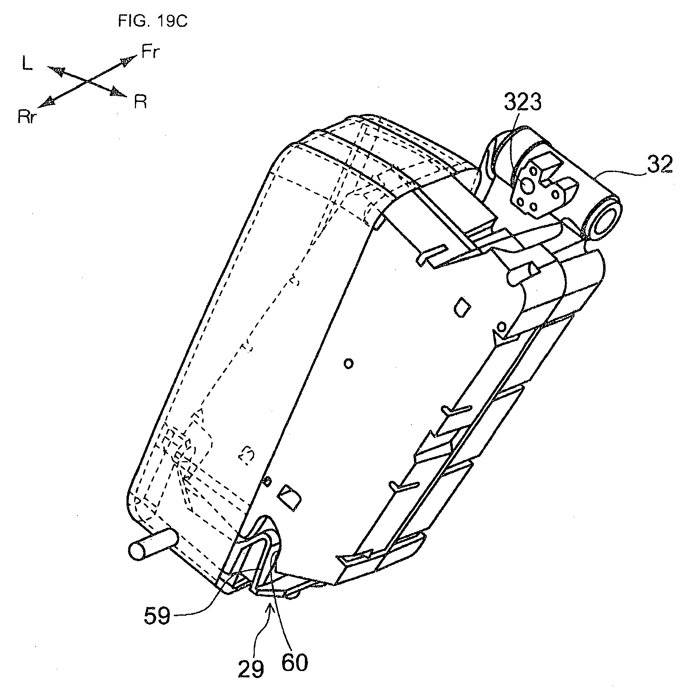

Subsequently, the battery pack 19 (which has been tentatively placed in the inclined posture) is tilted up toward the left side of the vehicle, to be put into an upright state. During this operation, as shown in Figs. 18C and 19C, the position of the battery pack 19 relative to the terminal base 29 is changed with corner portions 60a of the end engagement recesses 60 acting as fulcrums, and the surface 19c is separated from the shelf 67 of the terminal base 29. The wall parts forming the end engagement recesses 60 each have a portion shaped to roughly coincide with the curve of the arc-shaped locus along which the peak portion 29P is moved in the course of transition of the battery pack 19 from the tentatively placed position to the upright position, in order not to hamper the movement of the battery pack 19 along the arc-shaped locus.

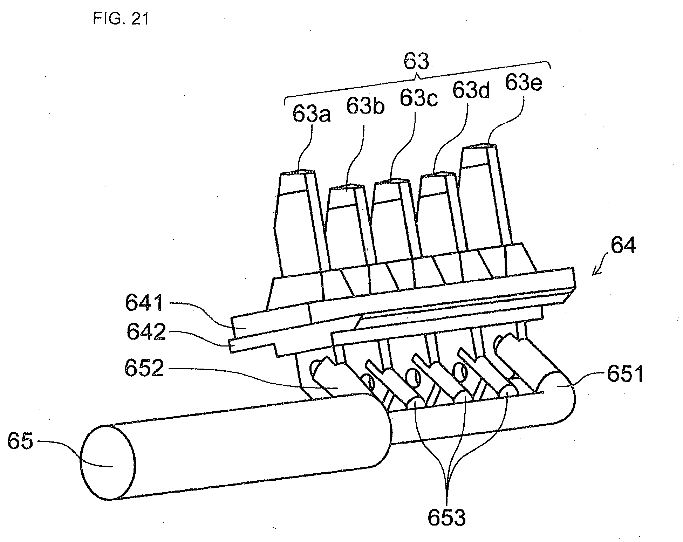

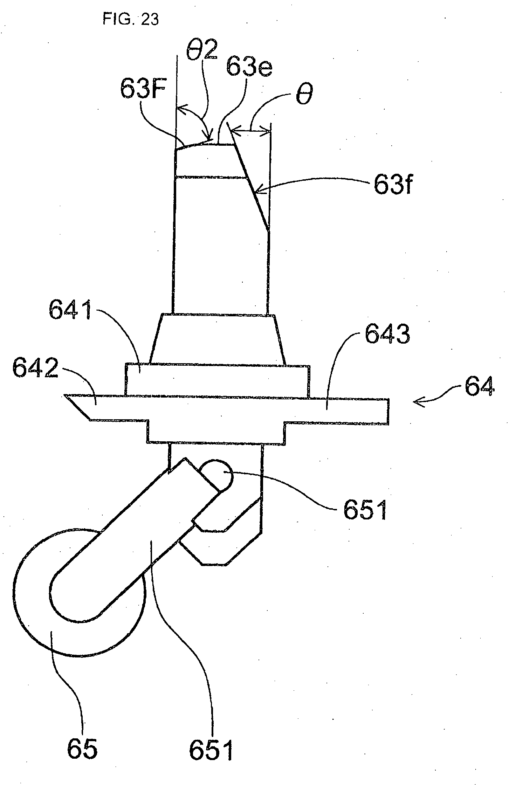

In the position shown in Figs. 18C and 19C, the male-side terminals 63 projecting upwardly from the terminal base 29 start being engaged with the insulator block 74 accommodating the female-side terminals 73 of the battery pack 19. The tips of the male-side terminals 63 are bevelled on the left side relative to the vehicle (on the depth side in the battery insertion direction). This ensures that the tips of the male-side terminals 63 are prevented from abutting against a corner portion of the opening of the insulator block 74 (a corner portion of the opening by which the male-side terminals 63 are guided to an insertion port for insertion into the female-side terminals 73). The detailed shape of the male-side terminals 63 will be described later with reference to Figs. 21 and 23, etc.

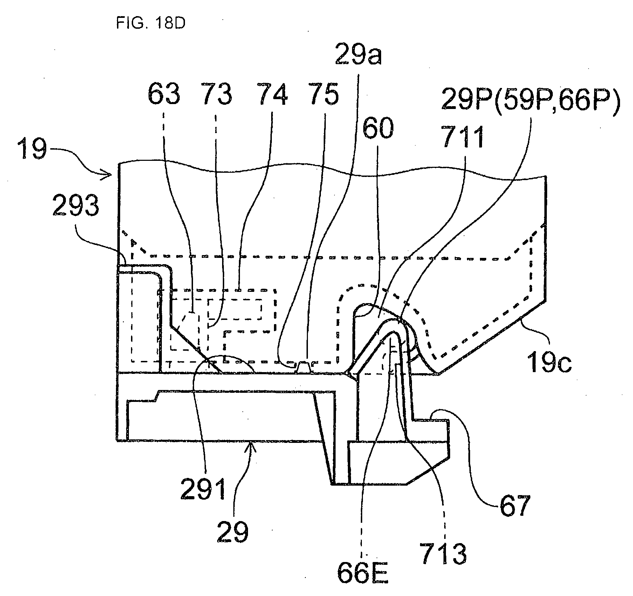

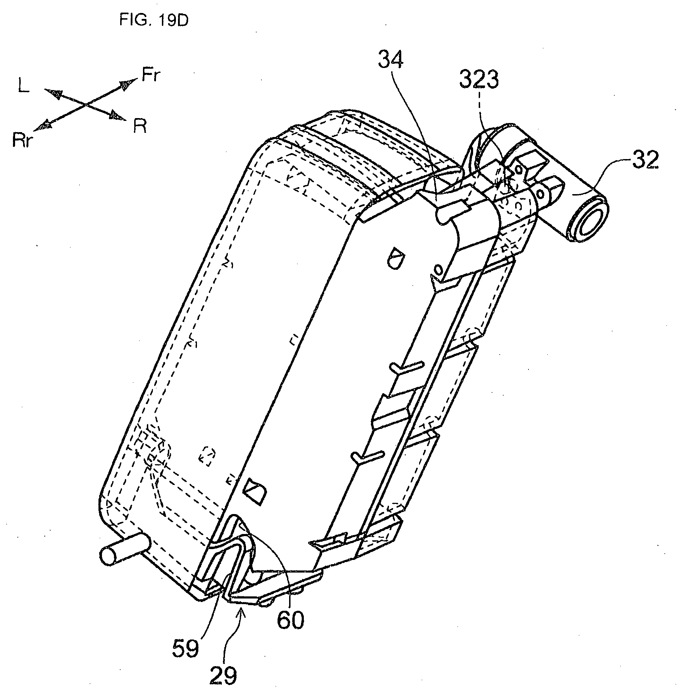

In Figs. 18D and 19D, the battery pack 19 is seated on the terminal base 29. In other words, the battery pack 19 is in a completely mounted position relative to the vehicle body. In this position, the bottom surface of the battery pack 19 is in contact with the upper surface of the base 292, and the male-side terminals 63 are in electrical contact with the female-side terminals 73. In this position, besides, the engagement hole 62 formed in the front wall 76 of the handle 34 of the battery pack 19 faces the lock pin 323 of the lock device 32. Thus, when the key is inserted into the key hole of the lock device 32 and turned to a predetermined lock position, the lock pin 323 protrudes and fits into the engagement hole 62. As a result, the battery pack 19 situated on the terminal base 29 is locked to the main frame 3 of the motorcycle 1.

In the position where the battery pack 19 is seated on the terminal base 29, the stopper 66E projecting from the peak portion 66P of the central engagement projection 66 of the battery pack support part 295 is in engagement with the inner circumferential surfaces (upper side surfaces) of the link part 713 between the parts 711 and 712 of the rib 71 and the link part 723 between the parts 721 and 722 of the rib 72. This ensures that the battery pack 19 is restrained in position in the vertical direction.

Further, the position of the battery pack 19 on the terminal base 29 in the direction parallel to the upper surface of the base 292 is restrained by those contact portions of the end engagement recesses 60, 60 and the central engagement recess 70 which make contact with the end engagement projections 59, 59 and the central engagement projection 66. In addition, the position is also restrained by the fitting between the cutout 75 formed in a bottom portion of the front part 20F of the battery case 20 and the projecting part 29a on the terminal base 29.

To detach the battery pack 19 from the terminal base 29 and the battery pack cover 28, operations reverse to the above-mentioned operations are carried out. Specifically, the lock device 32 is operated with the key, to retract the lock pin 323 from the engagement hole 62. The battery pack 19 can then be tilted to the right side of the vehicle body. When the upper side of the battery pack 19 is tilted to the right of the vehicle by gripping the handle 34 and the battery pack 19 is pulled upward, therefore, the battery pack 19 can be detached from the motorcycle 1.

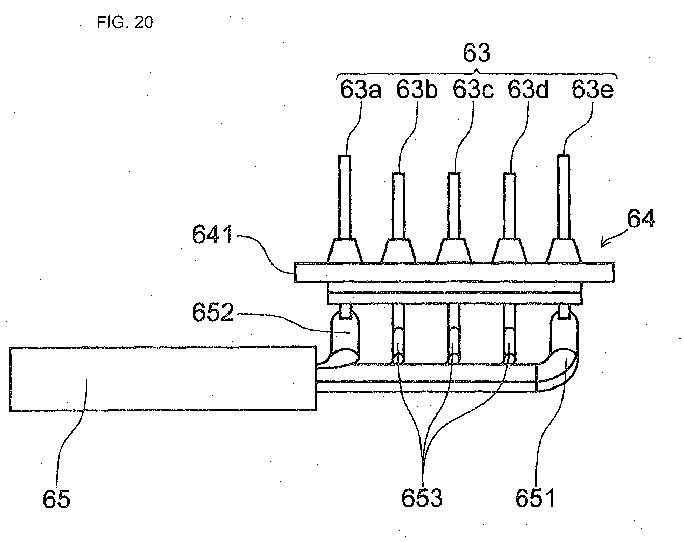

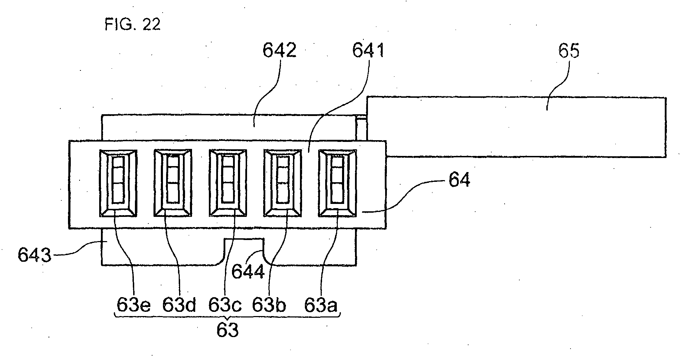

Fig. 20 is a view of a male-side terminal unit from the right side of the vehicle body, Fig. 21 is a perspective view of the male-side terminal unit from a rear right lower side of the vehicle body, Fig. 22 is a plan view of the male-side terminal unit, and Fig. 23 is a view of the male-side terminal unit from the front side of the vehicle body. In Figs. 20 to 23, a plurality of male-side terminals 63 (here, five) are provided, and they are arrayed in the longitudinal direction of the vehicle.

Of the plurality of male-side terminals 63, two (63a and 63e) are power terminals which are connected respectively to the plus side and the minus side of the battery pack 19, and the remaining ones (63b, 63c and 63d) are signal line terminals which are connected to signal lines. The power terminals 63a, 63e are disposed such that their tips are located above the tips of the signal line terminals 63b, 63c and 63d. This ensures that during connection, the power terminals 63a, 63e are electrically connected to the female-side terminals 73 before the connection of the signal line terminals 63b, 63c and 63d. This contributes to enhancement of durability of the power terminals 63a, 63e and the female-side terminals 73.

As shown in Fig. 23, at the tip of the male-side terminal 63, the corner 63f on the left side relative to the vehicle is obliquely bevelled at an angle θ relative to the lengthwise direction of the male-side terminal 63. Further, the corner 63F on the right side relative to the vehicle is bevelled at an angle θ2, greater than the angle θ, relative to the lengthwise direction of the male-side terminal 63. The bevel length L at the corner 63f is greater than the bevel length L2 at the corner 63F. In other words, the corner 63f is cut more than the corner 63F. Thus, the tip of the male-side terminal 63 is tapered off.

The bevel at the corner 63F is provided so during connection of the male-side terminal 63 to the female-side terminal 73, the contact of the male-side terminal 63 to the female-side terminal 73 is started not with a point but with a surface. On the other hand, the bevel at the corner 63f is provided to ensure a clearance and to prevent the tip of the male-side terminal from touching or being caught on the corner of the insulator block 74, during initial contact of the male-side terminal 63 with the female-side terminal 73.

The number of signal line terminals is not limited to three, and may be increased or decreased, as required. Alternatively, the number of the signal line terminals may be fixed, for example, to five, and all or some of them may be used according to situations, for example, the model and type of the motorcycle 1.

The male-side terminal 63 is provided to orthogonally penetrate the insulator board 64. Electric wires 651 and 652 or signal lines 653, 653, 653 branched from the harness 65 are connected to the portion of the male-side terminal 63 which is located below the insulator board 64.

The insulator board 64 includes a main part 641 to be fitted into the opening 291 formed in the terminal base 29, a right-side edge 642 projecting from the main part 641 towards the right relative to the vehicle, which is to be clamped between the main part 641 and the upper guides 298 of the terminal base 29, and a left-side edge 643 projecting from the main part 641 towards the left relative to the vehicle, which is to be engaged with the stopper 300 extending from the terminal base 29. The left-side edge 643 is formed with a recess 644. The tip of the stopper 300 comes around to the upper side of the left-side edge 643 of the insulator board 64 while avoiding the recess 644. The insulator board 64 is fixed by being clamped between the stopper 300 and the lower guide 301 of the terminal base 29 (see also Figs. 8 and 9).

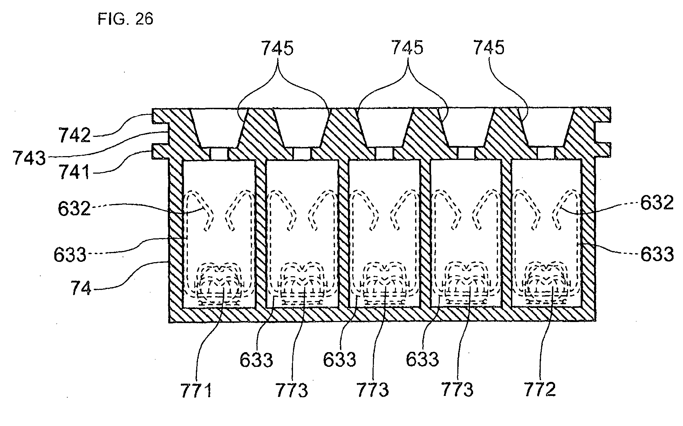

Fig. 24 is a perspective view of the insulator block 74 with the female-side terminals 73 accommodated therein, as viewed from a right lower front side of the vehicle body, Fig. 25 is a perspective view of the same as viewed from a left upper rear side, and Fig. 26 is a sectional view of the insulator block 74, as viewed from a left side of the vehicle body, showing contact parts of the female-side terminals 73.

As shown in Figs. 24 to 26, the insulator block 74 is formed in its upper portion with a plurality openings 745 (here, five) in which to insert the plurality of male-side terminals 63 (63a to 63e). The opening 745 is rectangular in cross-section, and has taper surfaces such that the area of the aperture reduces with increasing depth. The female-side terminal 73 is located on the narrower side of the opening 745. The female-side terminal 73 has a connection part 633 which extends from two connection parts 632 and 632, which can clamp the inserted male-side terminal 63 from two sides (as shown in Fig. 26), and which is connected to electric wires 771 and 772 or a signal line 773.

At the outer circumference of the part surrounding the openings 745, flange parts 741 and 742 are formed, by means of which the circumferential edge of the opening 103 formed in the bottom portion of the battery case 20 is clamped from the inside and the outside of the bottom chamber 20B. The part 743 located between the flange parts 741 and 742 has dimensions which allow it to conform to the inner edge of the opening 103.

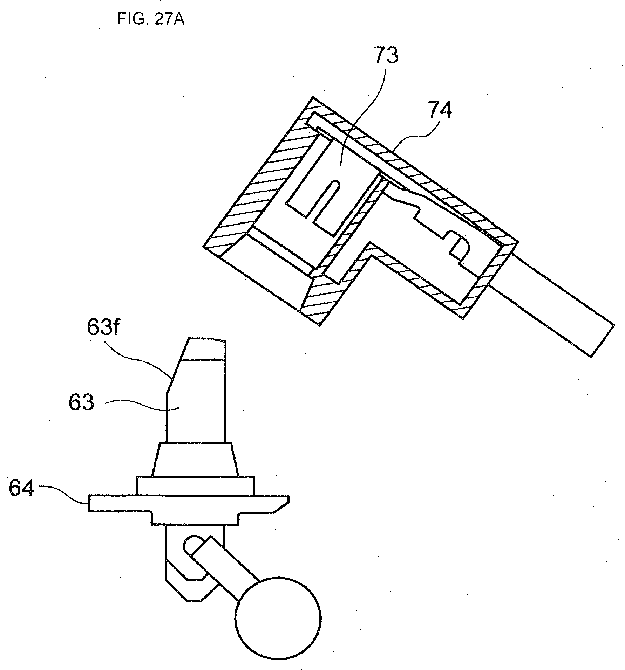

Now, the positional relationship between the male-side terminals 63 and the female-side terminals 73 corresponding to the positional relationship between the battery pack 19 and the terminal base 29 will be described below. Figs. 27A to 27E are sectional views showing the positional relationship between the male-side terminal 63 and the female-side terminal 73, as viewed from the rear side of the vehicle body. First, in Fig. 27A, the insulator block 74 with the female-side terminal 73 accommodated therein is brought closer to the male-side terminal 63 from a right upper side of the vehicle body.

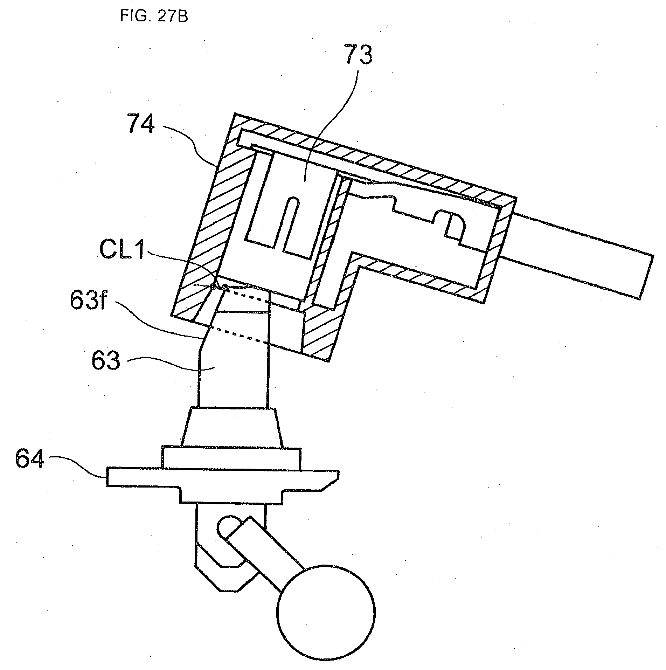

In Fig. 27B, the tip of the male-side terminal 63 is in such a position that it is partly inserted into the insulator block 74. Since the opening 745 of the insulator block 74 is formed with a taper, a large clearance CL1 is maintained between the corner 63f formed by obliquely cutting the tip of the male-side terminal 63 and the insulator block 74.

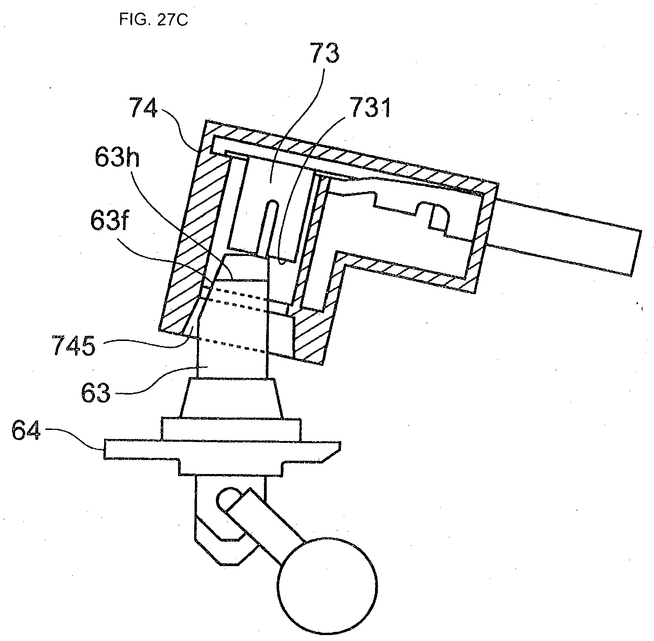

In Fig. 27C, the tip of the male-side terminal 63 is in contact with the end portion of the female-side terminal 73 inside the insulator block 74 which is closest to the opening 745. In this position, the corner 63f of the male-side terminal 63 and the taper surface of the opening 745 of the insulator block 74 are roughly parallel to each other.

A tip portion of the male-side terminal 63 is shaped so that plate thickness decreases toward the tipmost portion. A ridgeline 63h exists at the boundary between the thinned portion and the portion where the plate thickness is maintained.

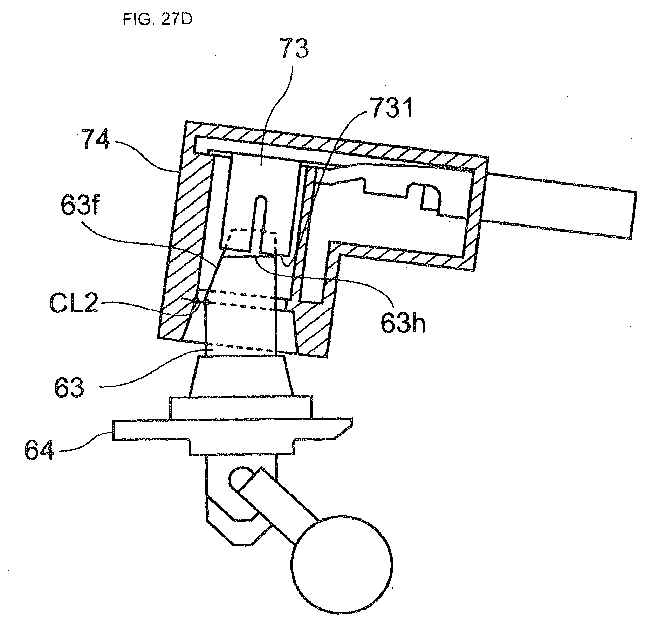

In Fig. 27D, the ridgeline 63h at the tip portion of the male-side terminal 63 and the end portion 731 of the female-side terminal 73 are roughly parallel to each other. In this instance, the clearance CL2 between the corner 63f of the male-side terminal 63 and the insulator block 74 is smaller than the clearance CL1. However, the male-side terminal 63 and the insulator block 74 are not in contact with each other.

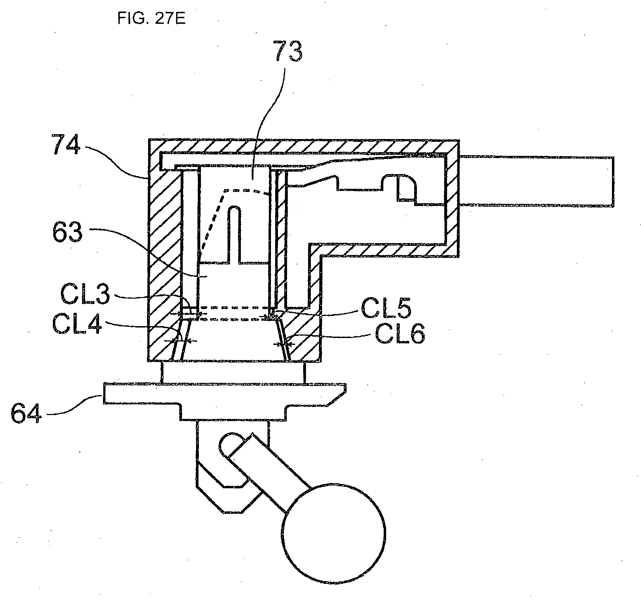

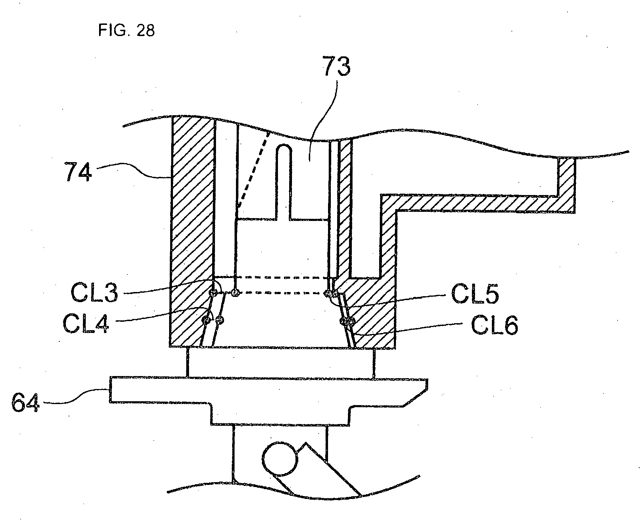

In Fig. 27E, there is shown a connected state where the battery pack 19 is mounted on the terminal base 29 in the position as shown in Fig. 18D. In this state, the male-side terminal 63 has entered into the female-side terminal 73, and the connection has been completed. In this state, on one side of the male-side terminal 63 (to the left of the vehicle), clearances CL3 and CL4 are maintained between the male-side terminal 63 and the insulator block 74. On the other side of the male-side terminal 63 (to the right of the vehicle), clearances CL5 and CL6 are also maintained, but these are smaller than the clearances CL3 and CL4. Fig. 28 is an enlarged view of a part of Fig. 27E, and shows these clearances in more detail.

The handle 34 formed on the upper portion of the battery case 20 is offset toward the right side of the battery pack 19. Therefore, the middle chamber 20M (the battery cell accommodating part) can be located just under the main frame 3 of the motorcycle 1, while that the handle 34 itself is located to the right side of the main frame 3 and can be raised up to such a position as to overlap with the main frame 3 in a side view of the vehicle body. With the handle 34 thus located at an upper position, the middle chamber 20M can be enlarged, and more battery cells can be accommodated therein.

Further, while the main frame 3 of the motorcycle 1 is a monocoque-type frame, the frame is not restricted to this design. An under frame extending downward from the head pipe 2 to be joined at its rear end to lower end portions of the pivot plates 4 may be provided.

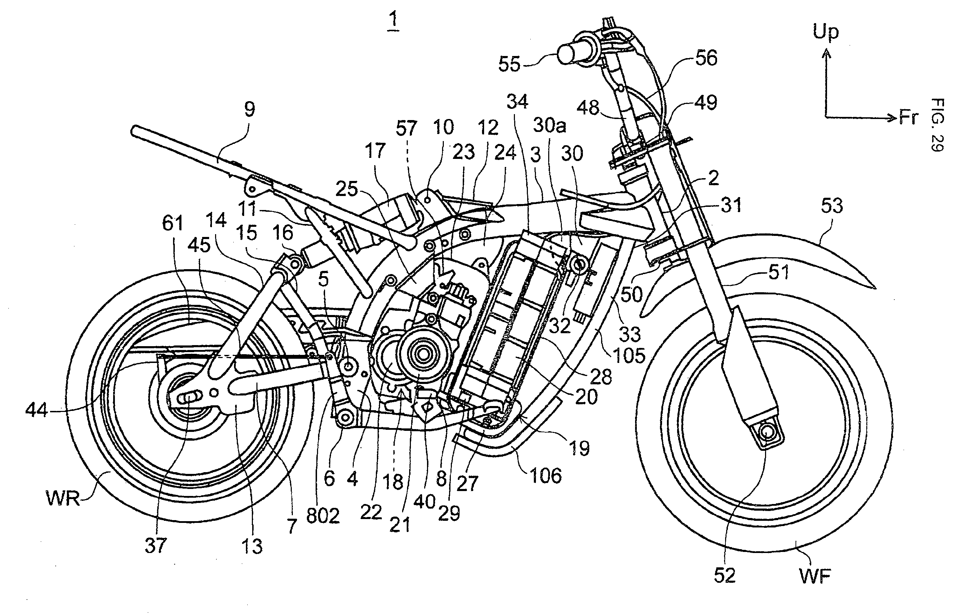

Fig. 29 is a right side view of the motorcycle 1 provided with an under frame. In Fig. 29, a skid plate 106 is provided on the front of the under frame 105. The skid plate 106 covers at least a front lower side of the battery pack 19. However, it is preferable for the skid plate 106 to extend from the front side of the under frame 105 to the motor case 23. This protects the battery pack 19 and the motor case 23 from small stones, sand, mud, water, etc., flying from the front and lower sides of the motorcycle 1. Incidentally, where the under frame 105 is provided, as shown in Fig. 29, the PDU 33 can be mounted to the under frame 105 instead of to the bracket 31.

Further, in Fig. 29, a lock device support stay 30 for fixing the lock device 32 can extend toward the rear of the vehicle to form a part 30a, and an upper portion of the battery pack cover 28 can be connected by the thus extended part 30a. Thus, the battery cover 28 can be supported at its lower portion by the battery pack holding stay 27 extending from the motor case 23, and at its upper portion by the lock device support stay 30.

## Claims

1. An electric vehicle with a power supply device, which comprises a battery case (20) for accommodating battery cells for supplying electric power to an electric motor (21) of the electric vehicle (1) and which can be mounted to and detached from the electric vehicle (1),
wherein the power supply device further comprises
a battery case terminal (73) which can be connected from above to a vehicle body terminal (63) accommodated in a terminal base (29) provided on a vehicle body, and
a battery case engagement part (60) which can engage from above with a vehicle body engagement part (59) formed at an upper surface of the terminal base (29);
wherein the vehicle body engagement part (59) is offset to one side from the lateral centre of the vehicle; and
the battery case engagement part (60) is offset to one side of the battery case (20) from the lateral centre of the vehicle in a state where the battery case (20) is mounted on the electric vehicle (1), and the battery case engagement part (60) is formed at each of the front and rear side portions of the battery case (20) relative to the vehicle, in order that the battery case engagement part (60) can fit to the vehicle body engagement part (59);
**characterized in that** the vehicle body engagement part (59) is an engagement projection, the battery case engagement part (60) is an engagement recess into which the engagement projection can fit, and, for mutual positioning, the engagement projection and the engagement recess are provided with wall parts (711) extending parallel to a direction in which the battery case (20) is mounted to and detached from the electric vehicle (1); and
**in that** the terminal base (29) is formed with a shelf (67) projecting horizontally from a foot portion of the engagement projection constituting the vehicle body engagement part (59) toward the side to which the vehicle body engagement part (59) is offset; and
the positions and shapes of the engagement projection as the vehicle body engagement part (59), the engagement recess as the battery case engagement part (60), and the shelf (67) are set such that a lower open end portion of the engagement recess makes contact with an upper surface of the shelf (67) when the battery case is in a tentatively placed position wherein a peak portion (59P) of the engagement projection makes contact with an inner surface of an uppermost portion of a wall part forming the engagement recess.

2. An electric vehicle with a power supply device according to claim 1,
wherein the battery case (20) has a generally rectangular parallelepipedal shape, a lower surface of the generally rectangular parallelepiped being formed with a slant surface (19c) extending obliquely upward from the lower open end portion of the engagement recess toward that one of surfaces adjacent to the lower surface which is adjacent on the side of protrusion of the shelf (67); and
the inclination angle of the slant surface (19c) is set such that the slant surface (19c) is situated along the upper surface of the shelf (67) in the tentatively placed position of the battery case.

3. An electric vehicle with a power supply device according to claim 1 or claim 2,
wherein the vehicle body engagement part (59) is provided at each of two positions of an upper surface of the terminal base (29);
and the terminal base (29) is provided with a vehicle body second engagement part (66) disposed between the vehicle body engagement parts (59) at the two positions, and with horizontal engagement parts (66E) protruding horizontally from a peak portion (66P) of the vehicle body second engagement part (66) toward the vehicle body engagement portions (59) at the two positions.

4. An electric vehicle with a power supply device according to any preceding claim,
wherein the engagement recess as the battery case side engagement part (60) includes a wall part coinciding generally with a locus of movement of the peak portion (59P) of the engagement projection, in the course of inclining the battery case (20) from the tentatively placed position to a completely mounted position.

5. An electric vehicle with a power supply device according to any preceding claim,
wherein a lower surface of the battery case (20) is formed with a fitting hole (75), into which a projection part (29a) provided on an upper surface of the terminal base (29) fits when the battery case is in a completely mounted position.

6. An electric vehicle with a power supply device according to any preceding claim,
wherein a battery cover (28) is attached to the terminal base (29), the battery cover (28) covering a lateral half of the battery case when the battery case is in a completely mounted position, the battery case engagement part (60) being provided on the other lateral half of battery case.

## Patentansprüche

1. Elektrofahrzeug mit einer Stromversorgungsvorrichtung, die ein Batteriegehäuse (20) zum Unterbringen von Batteriezellen zum Versorgen eines Elektromotors (21) des Elektrofahrzeugs (1) mit elektrischer Leistung umfasst, und das am Elektrofahrzeug (1) angebracht und davon abgenommen werden kann,
wobei die Stromversorgungsvorrichtung ferner
einen Batteriegehäuseanschluss (73), der von oben mit einem Karosserieanschluss (63) verbunden werden kann, der in einem Anschlussträger (29) untergebracht ist, welcher an einer Karosserie vorgesehen ist, und
ein Batteriegehäuseeingriffsteil (60) umfasst, das von oben in ein Karosserieeingriffsteil (59) eingreifen kann, welches auf einer oberen Oberfläche des Anschlussträgers (29) ausgebildet ist;
wobei das Karosserieeingriffsteil (59) zu einer Seite vom seitlichen Zentrum des Fahrzeugs versetzt ist; und
das Batteriegehäuseeingriffsteil (60) zu einer Seite des Batteriegehäuses (20) vom seitlichen Zentrum des Fahrzeugs in einem Zustand versetzt ist, in dem das Batteriegehäuse (20) am Elektrofahrzeug (1) angebracht ist, und das Batteriegehäuseeingriffsteil (60) an jedem der vorderen und hinteren Seitenabschnitte des Batteriegehäuses (20) bezüglich des Fahrzeugs ausgebildet ist, damit das Batteriegehäuseeingriffsteil (60) am Karosserieeingriffsteil (59) passen kann;
**dadurch gekennzeichnet, dass** das Karosserieeingriffsteil (59) ein Eingriffsvorsprung ist, das Batteriegehäuseeingriffsteil (60) eine Eingriffsaussparung ist, in die der Eingriffsvorsprung passen kann, und der Eingriffsvorsprung und die Eingriffsaussparung zum wechselseitigen Positionieren mit Wandteilen (711) versehen sind, die parallel zu einer Richtung verlaufen, in der das Batteriegehäuse (20) am Elektrofahrzeug (1) angebracht und davon abgenommen wird; und
dass der Anschlussträger (29) mit einem Absatz (67) ausgebildet ist, der horizontal von einem Fußabschnitt des Eingriffsvorsprungs, der das Karosserieeingriffsteil (59) bildet, zu der Seite hin vorsteht, zu der das Karosserieeingriffsteil (59) versetzt ist; und
die Positionen und Formen des Eingriffsvorsprungs als das Karosserieeingriffsteil (59), die Eingriffsaussparung als das Batteriegehäuseeingriffsteil (60) und des Absatzes (67) derart eingerichtet sind, dass der obere offene Endabschnitt der Eingriffsaussparung Kontakt mit einer oberen Oberfläche des Absatzes (67) herstellt, wenn das Batteriegehäuse in einer vorläufig angeordneten Position ist, wobei ein Spitzenabschnitt (59P) des Eingriffsabschnitts Kontakt mit einer Innenfläche eines obersten Abschnitts eines Wandteils herstellt, das die Eingriffsaussparung ausbildet.

2. Elektrofahrzeug mit einer Stromversorgungsvorrichtung nach Anspruch 1,
wobei das Batteriegehäuse (20) eine im Allgemeinen rechteckige Parallelflachform aufweist, wobei eine untere Oberfläche des im Allgemeinen rechteckigen Parallelflachs mit einer schiefen Oberfläche (19c) ausgebildet ist, die vom unteren offenen Endabschnitt des Eingriffsvorsprungs schräg nach oben zu der einen von der unteren Oberfläche benachbarten Oberflächen verläuft, die auf der Vorsprungsseite des Absatzes (67) benachbart ist; und
wobei der Neigungswinkel der schiefen Oberfläche (19c) derart eingerichtet ist, dass die schiefe Oberfläche entlang der oberen Oberfläche (19c) des Absatzes (67) in der vorläufig angeordneten Position des Batteriegehäuses angeordnet ist.

3. Elektrofahrzeug mit einer Stromversorgungsvorrichtung nach einem der Ansprüche 1 oder 2,
wobei das Karosserieeingriffsteil (59) an jeder von zwei Positionen einer oberen Oberfläche des Anschlussträgers (29) vorgesehen ist;
und der Anschlussträger (29) mit einem zweiten Karosserieeingriffsteil (66), das zwischen den Karosserieeingriffsteilen (59) an den zwei Positionen angeordnet ist, und mit horizontalen Eingriffsteilen (66E) versehen ist, die horizontal von einem Spitzenabschnitt (66P) des zweiten Karosserieeingriffsteils (66) zu den Karosserieeingriffsabschnitten (59) an den zwei Positionen vorstehen.

4. Elektrofahrzeug mit einer Stromversorgungsvorrichtung nach einem der vorhergehenden Ansprüche,
wobei die Eingriffsaussparung als das Batteriegehäuseeingriffsteil (60) ein Wandteil enthält, das im Allgemeinen mit einer Ortskurve des Spitzenabschnitts (59P) des Eingriffsvorsprungs im Verlauf des Neigens des Batteriegehäuses (20) aus der vorläufig angeordneten Position in eine vollständig angebrachte Position zusammenfällt.

5. Elektrofahrzeug mit einer Stromversorgungsvorrichtung nach einem der vorhergehenden Ansprüche,
wobei eine untere Oberfläche des Batteriegehäuses (20) mit einem Passloch (75) ausgebildet ist, in das ein Vorsprungsteil (29a), das auf einer oberen Oberfläche des Anschlussträgers (29) vorgesehen ist, passt, wenn das Batteriegehäuse in einer vollständig angebrachten Position ist.

6. Elektrofahrzeug mit einer Stromversorgungsvorrichtung nach einem der vorhergehenden Ansprüche,
wobei eine Batterieabdeckung (28) am Anschlussträger (29) angebracht ist, wobei die Batterieabdeckung (28) eine seitliche Hälfte des Batteriegehäuses abdeckt, wenn das Batteriegehäuse in einer vollständig angebrachten Position ist, wobei das Batteriegehäuseeingriffsteil (60) an der seitlichen Hälfte des Batteriegehäuses vorgesehen ist.

## Revendications

1. Véhicule électrique pourvu d'un dispositif d'alimentation électrique qui comprend un bac de batterie (20) pour recevoir des éléments de batterie afin de fournir de l'énergie électrique à un moteur électrique (21) du véhicule électrique (1) et qui peut être monté dans le véhicule électrique (1),
dans lequel le dispositif d'alimentation électrique comprend en outre :
une borne de bac de batterie (73) qui peut être connectée par le dessus à une borne de caisse de véhicule (63) reçue dans une base de connexion (29) située sur une caisse de véhicule, et
une partie (60) d'engagement du bac de la batterie qui peut s'engager par le dessus sur une partie (59) d'engagement de la caisse du véhicule formée sur une surface supérieure de la base de connexion (29) ;
dans lequel la partie (59) d'engagement de la caisse du véhicule est décalée d'un côté du centre latéral du véhicule ; et
la partie (60) d'engagement du bac de la batterie est décalée sur un côté du bac de batterie (20) du centre latéral du véhicule dans un état où le bac de batterie (20) est monté sur le véhicule électrique (1) et la partie (60) d'engagement du bac de la batterie est formée sur chacune des parties latérales avant et arrière du bac de batterie (20) par rapport au véhicule afin que la partie (60) d'engagement du bac de la batterie puisse s'ajuster sur la partie (59) d'engagement de la caisse du véhicule ;
**caractérisé en ce que** la partie (59) d'engagement de la caisse du véhicule est une saillie d'engagement, la partie (60) d'engagement du bac de la batterie est une cavité d'engagement dans laquelle la saillie d'engagement peut s'ajuster et, pour assurer un positionnement mutuel, la saillie d'engagement et la cavité d'engagement sont pourvues de parties de paroi (711) s'étendant parallèlement à la direction dans laquelle le bac de batterie (20) est monté sur le véhicule (1) et détaché de ce dernier ; et
la base de connexion (29) est formée avec une tablette (67) faisant saillie horizontalement d'une partie de pied de la saillie d'engagement constituant la partie (59) d'engagement de la caisse du véhicule vers le côté où la partie (59) d'engagement de la caisse du véhicule est décalée ; et
les positions et les formes de la saillie d'engagement comme partie (59) d'engagement de la caisse du véhicule, de la cavité d'engagement comme partie (60) d'engagement du bac de la batterie et de la tablette (67) sont réglées de sorte qu'une partie d'extrémité inférieure ouverte de la cavité d'engagement vienne en contact avec une surface supérieure de la tablette (67) lorsque le bac de la batterie est dans une position provisoire, dans laquelle une partie de crête (59P) de la saillie d'engagement vient en contact avec une surface interne d'une portion la plus élevée d'une partie de paroi formant la cavité d'engagement.

2. Véhicule électrique pourvu d'un dispositif d'alimentation électrique selon la revendication 1,
dans lequel le bac de batterie (20) a une forme parallélépipédique globalement rectangulaire, une surface inférieure du parallélépipède globalement rectangulaire étant formée avec une surface inclinée (19c) s'étendant en oblique vers le haut depuis la partie d'extrémité inférieure ouverte de la cavité d'engagement vers l'une des surfaces adjacentes à la surface inférieure qui est adjacente du côté de saillie de la tablette (67) ; et
l'angle d'inclinaison de la surface inclinée (19c) est réglée de sorte que la surface inclinée (19c) soit située le long de la surface supérieure de la tablette (67) dans la position provisoire du bac de la batterie.

3. Véhicule électrique pourvu d'un dispositif d'alimentation électrique selon la revendication 1 ou la revendication 2,
dans lequel la partie (59) d'engagement de la caisse du véhicule est disposée dans chacune de deux positions d'une surface supérieure de la base de connexion (29) ;
et la base de connexion (29) est pourvue d'une seconde partie (66) d'engagement de la caisse du véhicule disposée entre les parties (59) d'engagement de la caisse du véhicule dans les deux positions et de parties d'engagement horizontales (66E) faisant saillie horizontalement d'une partie de crête (66P) de la seconde partie (66) d'engagement de la caisse du véhicule vers les parties (59) d'engagement de la caisse du véhicule dans les deux positions.

4. Véhicule électrique pourvu d'un dispositif d'alimentation électrique selon l'une quelconque des revendications précédentes,
dans lequel la cavité d'engagement comme partie (60) d'engagement du côté bac de la batterie comprend une partie de paroi coïncidant généralement avec un lieu de déplacement de la partie de crête (59P) de la saillie d'engagement au cours de l'inclinaison du bac de batterie (20) entre la position provisoire et la position complètement montée.

5. Véhicule électrique pourvu d'un dispositif d'alimentation électrique selon l'une quelconque des revendications précédentes,
dans lequel une surface inférieure du bac de batterie (20) est formée avec un trou d'ajustement (75) dans lequel une partie saillante (29a) ménagée sur une surface supérieure de la base de connexion (29) s'ajuste lorsque le bac de la batterie est en position complètement montée.

6. Véhicule électrique équipé d'un dispositif d'alimentation électrique selon l'une quelconque des revendications précédentes,
dans lequel un couvercle de batterie (28) est fixé à la base de connexion (29), le couvercle de batterie (28) recouvrant une moitié latérale du bac de la batterie lorsque le bac de la batterie est en position complètement montée, la partie (60) d'engagement du bac de la batterie étant prévue sur l'autre moitié latérale du bac de la batterie.
